# EUROPEAN PATENT APPLICATION

(11) **EP 4 556 305 A1**
(43) Date of publication of application: **21.05.2025**
(21) Application number: 24849118.5
(22) Date of filing: 29.07.2024
(51) Int. Cl.: B60N 2/34, B60N 2/005, B60N 2/75

(54) **VEHICLE SEAT**

(30) Priority: 02.08.2023 US 202363517145 P; 02.10.2023 US 202363587327 P; 27.03.2024 JP 2024050855; 27.03.2024 JP 2024050857; 27.03.2024 JP 2024050879; 27.03.2024 JP 2024050880; 27.03.2024 JP 2024050881; 27.03.2024 JP 2024050856
(71) Applicant: TS Tech Co., Ltd., Asaka-shi Saitama 351-0012 (JP)
(72) Inventor: KOBAYASHI Akihito, Shioya-gun, Tochigi 329-1217 (JP); TOMIOKA Kotaro, Shioya-gun, Tochigi 329-1217 (JP); YOSHIOKA Yuki, Shioya-gun, Tochigi 329-1217 (JP); PARK Heehyeok, Shioya-gun, Tochigi 329-1217 (JP); TAKIGAWA Yoshihide, Shioya-gun, Tochigi 329-1217 (JP); KOHATA Yasutaka, Shioya-gun, Tochigi 329-1217 (JP); SHIBUYA Makoto, Shioya-gun, Tochigi 329-1217 (JP)
(74) Representative: Potter Clarkson
(86) International application number: PCT/JP2024/026911
(87) International publication number: WO 2025/028467

(57) **Abstract**

A highly usable vehicle seat is achieved. The vehicle seat includes a seat cushion 12 positioned in front of a rear wheel house 111 of the vehicle and supporting buttocks and thighs of an occupant, a seat back 13 supporting a back of the occupant, a reclining mechanism part 14 for inclining the seat back 13 relative to the seat cushion 12, and an elevating mechanism part 15 capable of lifting and lowering the seat cushion 12 in a vertical direction with respect to a vehicle floor surface, that lifts the seat cushion 12 in the vertical direction when seat arrangement is being, by the reclining mechanism part 14, transformed into a backward falling state in which the seat back 13 falls backward, in conjunction with inclination of the seat back 13 to the backward falling state so that the seat back 13 is positioned above the rear wheel house 111 to avoid interference with the rear wheel house 111, wherein the seat back 13 has an armrest on one side thereof.

## Description

### TECHNICAL FIELD

The present invention relates to a vehicle seat for rear seats of vehicles.

### BACKGROUND ART

In a vehicle seat for a rear seat of a vehicle, it is known that a seat back of a rear seat is inclined backward to make the seat back as close as possible to a level (hereinafter, sometimes simply referred to as a flat state) (see, for example, Patent Document 1). By transforming the seat arrangement in such a flat state, the inside of the vehicle can be widely used.

### CITATION LIST

### Patent Document

Patent Document 1: Japanese Unexamined Utility Model Application Publication No. H2-76533

### SUMMARY OF INVENTION

### Technical Problem

However, in Patent Document 1, when the seat back of the rear seat is to be inclined backward, a part of the seat back (side back 13 in FIGS. 1 and 2 of Patent Document 1) interferes with the rear wheel house of the vehicle (tire house 4 in FIGS. 1 and 2 of Patent Document 1). Therefore, in Patent Document 1, only the remaining part of the seat back separable from this part (the center back 12 in FIGS. 1 and 2 of Patent Document 1) is in a flat state. That is, in Patent Document 1, the entire seat back cannot be completely flat, and the vehicle interior cannot be widely used as much as possible.

As described above, in order to improve the usability of the vehicle seat for the rear seats of the vehicles, further contrivance is required.

In view of the above, it is an object of the present disclosure to provide a vehicle seat capable of realizing high usability, and in particular, to provide a vehicle seat capable of widely using a vehicle rear space after the seat arrangement is completely flat.

### Solution to Problem

In order to solve the above problem, the present disclosure provides the following vehicle seat.
[1] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion; and
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, wherein
   the seat back includes an armrest on one side thereof on which an arm of the occupant rests when supporting the back of the occupant.
[2] The vehicle seat according to [1], wherein a plurality of the vehicle seats are arranged in parallel independently of each other along a vehicle-width direction, and each of a plurality of the elevating mechanism part lifts and lowers the seat cushions to be elevated independently of each other.
[3] The vehicle seat according to [1] or [2], wherein
   the armrest is rotatable, using an end portion of the armrest as a rotation axis, between a raised state in which the armrest protrudes in a direction intersecting a surface of the seat back extending while facing the back of the occupant and an unraised state in which the armrest extends along the surface of the seat back, and
   the seat back further includes an armrest storage groove portion having a groove-shape and capable of storing the armrest in the unraised state.
[4] The vehicle seat according to [3], wherein the armrest has a shade storage portion capable of storing a shade that functions as a partition or a sunshade inside the vehicle.
[5] The vehicle seat according to [3], wherein the armrest has an attachment mounting part on distal end portion for attaching a predetermined attachment.
[6] The vehicle seat according to [3], wherein the armrest storage groove portion has a power supply port at a bottom portion thereof for supplying power to electronic devices.
[7] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion; and
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, wherein
   the seat cushion includes a cushion bank portion that occupies one side of the seat cushion and is rotatable, using a rear end portion of the cushion bank portion as a rotation axis, separately from the rest of the seat cushion except for the cushion bank portion.
[8] The vehicle seat according to [7], wherein a plurality of the vehicle seats are arranged in parallel independently of each other along a vehicle-width direction, and each of a plurality of the elevating mechanism part lifts and lowers the seat cushions to be elevated independently of each other.
[9] The vehicle seat according to [7] or [8], wherein the seat cushion further includes a rotation position fixing mechanism for fixing a rotation position when the cushion bank portion is rotated separately from the rest of the seat cushion.
[10] The vehicle seat according to [9], wherein
   the seat back includes an overhang portion on a side of the seat back located in a rotational direction of the cushion bank portion, that abuts the cushion bank portion which is rotated, and prevents further rotation of the cushion bank portion, and
   the cushion bank portion is rotatable between a non-rotating state in which the cushion bank portion occupies the one side of the seat cushion in a manner aligned with the rest of the seat cushion and an abutting state in which the cushion bank portion abuts the overhang portion of the seat back.
[11] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion; and
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, wherein
   the seat cushion or the seat back includes
   a shade storage portion capable of storing a shade that functions as a partition or a sunshade inside the vehicle and
   an engaging part that engages, when the shade is unfolded and used as a partition or a sunshade inside the vehicle, with a part of the unfolded shade to support the shade.
[12] The vehicle seat according to [11], wherein a plurality of the vehicle seats are arranged in parallel independently of each other along a vehicle-width direction, and each of a plurality of the elevating mechanism part lifts and lowers the seat cushions to be elevated independently of each other.
[13] The vehicle seat according to [11] or [12], wherein
   the seat cushion includes a cushion bank portion that occupies one side of the seat cushion and is rotatable, using a rear end portion of the cushion bank portion as a rotation axis, separately from the rest of the seat cushion except for the cushion bank portion, and
   the cushion bank portion has the shade storage portion.
[14] The vehicle seat according to [13], wherein the shade storage portion is capable of storing a shade having a foldable skeleton as the shade.
[15] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion;
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, and
   a sensor installed on a seat surface of at least one of the seat cushion and the seat back, wherein
   the sensor functions as a human detection sensor capable of detecting a user of a vehicle rear space after the seat back is transformed into a seat arrangement that is in the backward falling state.
[16] The vehicle seat according to [15], a plurality of the vehicle seats are arranged in parallel independently of each other along a vehicle-width direction, and each of a plurality of the elevating mechanism part lifts and lowers the seat cushions to be elevated independently of each other.
[17] The vehicle seat according to [15] or [16], wherein the sensor functions as a biometric sensor capable of acquiring biometric information of the seated occupant when seat arrangement is transformed into a standing state of the seat back with respect to the vehicle floor surface by the reclining mechanism part.
[18] The vehicle seat according to [15] or [16], wherein the user is a child.
[19] The vehicle seat according to [15] or [16], further comprising a detection information transmitting unit that transmits the detected detection information of the user to the inside of the vehicle and/or the outside of the vehicle.
[20] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion;
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house; and
   an air-conditioning mechanism unit including a plurality of vent holes provided on a seat surface of the seat back; an air passage that communicates with the vent hole and is capable of circulating conditioned air; and an air-conditioning fan that communicates with the air passage and generates the conditioned air in the air passage.
[21] The vehicle seat according to [20], wherein a plurality of the vehicle seats are arranged in parallel independently of each other along a vehicle-width direction, and each of a plurality of the elevating mechanism part lifts and lowers the seat cushions to be elevated independently of each other.
[22] The vehicle seat according to [20] or [21], wherein the air-conditioning fan is provided near a corner of a seat back frame constituting the seat back. It is characterized.
[23] The vehicle seat according to [20] or [21], wherein the air-conditioning fan is one of an intake fan and an exhaust fan.
[24] The vehicle seat according to [20] or [21], wherein the air passage includes
   an air passage groove portion provided inside the seat back and connecting between the vent hole and the air-conditioning fan; and
   a groove portion covering part covering the air passage groove portion from the back face of the seat back which opposes the seat surface.
[25] A vehicle seat for a rear seat of a vehicle, comprising:
   a seat cushion positioned in front of a rear wheel house of the vehicle and supporting buttocks and thighs of an occupant;
   a seat back supporting a back of the occupant;
   a reclining mechanism part for inclining the seat back relative to the seat cushion;
   an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house; and
   a seat back support part which has a rotation shaft mounted on a back face of the seat back and a support leg part rotatably mounted on the rotation shaft, is formed so as to be transformed into a folded state in which the support leg part is folded along the back face and a unfolded state in which the support leg part is unfolded from the back face, and supports the seat back from below with the support leg part in the unfolded state.
[26] The vehicle seat according to [25], wherein a plurality of the vehicle seats are arranged in parallel independently of each other along a vehicle-width direction, and each of a plurality of the elevating mechanism part lifts and lowers the seat cushions to be elevated independently of each other.
[27] The vehicle seat according to [25] or [26], wherein the seat back support part further includes a support leg part fixing portion for fixing the support leg part to the folded state.
[28] The vehicle seat according to [20] or [21], wherein the seat back support part further includes a support leg part unlocking mechanism part that releases the fixing of the support leg part by the support leg part fixing portion in conjunction with the transformation of the seat back to the seat arrangement in which the seat back is in the backward falling state by the reclining mechanism part.

### Advantageous Effects of Invention

According to the invention described in [1], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and no level difference is generated. As a result, the seat arrangement can be transformed into a completely flat state (full flat state), and the vehicle rear space after the transformation can be used as widely as possible.

According to the invention described in [2], it is possible to relatively change the heights of the rear seats adjacent to each other, and for example, it is possible to adjust the height of the seat cushion so that there is the height of the eyes of the parent and child when lying down.

According to the invention described in [3], it is convenient to switch between the erection and the storage of the armrest as necessary.

According to the invention described in [4], there is no need to prepare a separate location for storing the shade when not in use, which contributes to a space saving in the vehicle.

According to the invention described in [5], it is possible to make it easier to use a predetermined attachment as desired by occupant to use the attachment in a vehicle that is widened by the seat arrangement in the backward falling state.

According to the invention described in [6], when the armrest is raised and a space is present in the armrest storage groove portion, an electronic device such as a smart phone that needs to be charged can be charged by placing it in the space and connecting it to a power supply port. Therefore, there is no need to separately secure a place for the electronic device to be charged, which contributes to a space saving in the vehicle.

According to the invention described in [7], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and no level difference is generated. As a result, the seat arrangement can be transformed into a completely flat state (full flat state), and the vehicle rear space after the transformation can be used as widely as possible. Further, by rotating a cushion bank portion, the cushion bank portion can function as an armrest on which an arm of an occupant rests when the seat cushion supports buttocks and thighs of the occupant.

According to the invention described in [8], it is possible to relatively change the heights of the rear seats adjacent to each other, and for example, it is possible to adjust the height of the seat cushion so that there is the height of the eyes of the parent and child when lying down.

According to the invention described in [9], the attitude of cushion bank portion is stabilized.

According to the invention described in [10], the attitude of cushion bank portion is further stabilized.

According to the invention described in [11], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and no level difference is generated. As a result, the seat arrangement can be transformed into a completely flat state (full flat state), and the vehicle rear space after the transformation can be used as widely as possible. For example, in the full flat state, when a shade stored in a shade storage portion is unfolded and a part of the shade is engaged with an engaging part to support the shade, the space covered by the shade can be maximally expanded.

According to the invention described in [12], it is possible to relatively change the heights of the rear seats adjacent to each other, and for example, it is possible to adjust the height of the seat cushion so that the heights of eyes of the parent and children are aligned when lying down.

According to the invention described in [13], when the seat cushion supports buttocks and thighs of the occupant, the cushion bank portion functions as an armrest on which an arm of the occupant rests, and there is no need to prepare an armrest separately. Further, by providing the cushion bank portion with the shade storage portion, there is no need to prepare a separate location for storing the shade when not in use. Therefore, further a space saving in the vehicle is realized.

According to the invention described in [14], by having a skeleton, the shape of the shade is stabilized when the shade is unfolded and used. However, the presence of a skeleton in the shade increases the size of the shade at the time of storage, but when the skeleton is foldable and can be stored in the shade storage portion, the shade storage portion does not affect a space saving in the vehicle.

According to the invention described in [15], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and no level difference is generated. As a result, the seat arrangement can be transformed into a completely flat state (full flat state), and the vehicle rear space after the transformation can be used as widely as possible.

In addition, when the seat back is transformed into the seat arrangement of the backward falling state described above, a sensor installed in the seat surface of the seat cushion and/or the seat back enables detection of the presence or absence of a user using the vehicle rear space after the transformation. Accordingly, it is easy to know whether or not a user is present in the vehicle rear space.

According to the invention described in [16], it is possible to relatively change the heights of the rear seats adjacent to each other, and for example, it becomes easier to adjust the height of the seat cushion so that the heights of eyes of the parent and children are aligned when lying down.

According to the invention described in [17], when the seat back is in a standing state, it is possible to function as a biometric sensor that acquires biometric information. As a result, biometric information such as the heart rate of the occupant while traveling seated in the rear seat can be acquired, and the sensor can switch its function according to the state of the seat back (the backward falling state and the standing state).

According to the invention described in [18], a child is a detection target as a user. This makes it easier for a guardian or the like to recognize the presence of a child playing and lying down in the vehicle rear space on the basis of the detection information.

According to the invention described in [19], the detection information related to the presence or absence of a user using the vehicle rear space can be transmitted from the detection information transmitting unit as an electric signal to the inside of the vehicle or the outside of the vehicle. As a result, for example, the state of the vehicle rear space is notified to a guardian who is seated in the driver's seat in the vehicle or a guardian or the like outside the vehicle.

According to the invention described in [20], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and there is almost no level difference. As a result, the seat arrangement can be transformed into a completely flat state (full flat state), and the vehicle rear space after the transformation can be used as widely as possible.

In addition, by providing the air-conditioning mechanism unit, when the seat back is transformed into the seat arrangement in the above-described backward falling state, ventilation by conditioned air can be performed on the vehicle rear space, and the comfort of the user is improved.

According to the invention described in [21], it is possible to relatively change the heights of the rear seats adjacent to each other, and for example, it becomes easier to adjust the height of the seat cushion so that the heights of eyes of the parent and children are aligned when lying down.

According to the invention described in [22], the air-conditioning fan of the air-conditioning mechanism unit is installed in the vicinity of the corner of the seat back frame. Thus, it does not interfere with the user, since it is installed in a portion having high rigidity, it is possible to stably fix, even when operating the air-conditioning fan, it is easy to suppress the generation of vibration, noise, and the like.

According to the invention described in [23], either one of an intake fan and an exhaust fan can be used as the air-conditioning fan, and the direction of the ventilation (aeration) of the vehicle rear space can be arbitrarily set, thereby improving the comfort of the user.

According to the invention described in [24], the air passage of the air-conditioning mechanism unit is combined with the air passage groove portion and the groove portion covering part to form an air passage through which the conditioned air can flow inside the seat back.

According to the invention described in [25], it has an elevating mechanism part capable of vertically lifting and lowering the seat cushion with respect to a vehicle floor surface, and when the seat arrangement is transformed by inclining the seat back to the backward falling state by a reclining mechanism part, the height of the seat cushion can be adjusted to a position where the seat back does not interfere with the rear wheel by using the elevating mechanism part. Consequently, the height of seat surface of the seat cushion and seat surface of the seat back can be matched, and there is almost no level difference. As a result, the seat arrangement can be transformed into a completely flat state (full flat state), and the vehicle rear space after the transformation can be used as widely as possible.

In addition, when the seat back is transformed by the seat back support part into the seat arrangement of the above-described backward falling state, the seat back can be supported from below by a support leg part unfolded in the unfolded state. That is, when one end of the support leg part transformed into the unfolded state is in contact with the vehicle floor surface, the load-bearing performance of the seat back (vehicle seat) in the completely flat state can be improved. This allows the vehicle rear space to be used for a wider range of applications.

According to the invention described in [26], it is possible to relatively change the heights of the rear seats adjacent to each other, and for example, it becomes easier to adjust the height of the seat cushion so that the heights of eyes of the parent and children are aligned when lying down.

According to the invention described in [27], the seat back support part has a support leg part fixing portion for fixing the support leg part to a folded state, and by fixing the support leg part to the folded state folded along the back face of the seat back, it is possible to restrict the rotation and displacement of the support leg part during normal traveling, that is, when the seat back is in the standing state, and to suppress generation of vibrations and the like.

According to the invention described in [28], a support leg part unlocking mechanism part that releases the fixing of the support leg part by the support leg part fixing portion in conjunction with the transformation into the seat arrangement with the seat back in the backward falling state can transform the support leg part from the folded state to the unfolded state. That is, when the seat back is inclined using the reclining mechanism part, the support leg part fixed to the folded state is unlocked without any special operation, and the support leg part can be easily transferred to the unfolded state in which it is unfolded, thereby improving user comfort.

### BRIEF DESCRIPTION OF DRAWINGS

[FIG. 1] This is a front view schematically showing a configuration of a vehicle seat according to an embodiment of the present invention.
[FIG. 2] This is a side view schematically showing a configuration of the vehicle seat of FIG. 1.
[FIG. 3] This is a diagram schematically showing the effectiveness of the present embodiment.
[FIG. 4] This is a schematic diagram for explaining the function of an armrest in the present embodiment.
[FIG. 5] This is a front view schematically showing a configuration of a vehicle seat according to an embodiment of the present invention.
[FIG. 6] This is a side view schematically showing a configuration of the vehicle seat of FIG. 5.
[FIG. 7] This is a diagram schematically showing the effectiveness of the present embodiment.
[FIG. 8] This is a schematic diagram for explaining the function of a cushion bank portion in the present embodiment.
[FIG. 9] This is a diagram schematically showing the effectiveness of the present embodiment.
[FIG. 10] This is a front view schematically showing a configuration of a vehicle seat according to an embodiment of the present invention.
[FIG. 11] This is a side view schematically showing a configuration of the vehicle seat of FIG. 10.
[FIG.12] This is a diagram schematically showing the effectiveness of the present embodiment.
[FIG.13] This is a schematic diagram for explaining a shade storage portion in the present embodiment.
[FIG. 14] This is a diagram schematically showing a state in which a shade stored in the shade storage portion of FIG. 13 is used in a state surrounding an occupant in the full flat state of FIG. 12.
[FIG.15] This is a front view schematically showing a configuration of a vehicle seat according to an embodiment of the present invention.
[FIG.16] This is a side view schematically showing a configuration of the vehicle seat of FIG. 15.
[FIG.17] This is a diagram schematically showing the effectiveness of the present embodiment.
[FIG.18] This is a front view schematically showing a configuration of a vehicle seat according to an embodiment of the present invention.
[FIG.19] This is a side view schematically showing a configuration of the vehicle seat of FIG. 18.
[FIG. 20] This is a diagram schematically showing the effectiveness of the present embodiment.
[FIG. 21] This is a diagram schematically showing an air passage groove portion.
[FIG.22] This is a diagram schematically showing a cross section of the seat back.
[FIG.23] This is a front view schematically showing a configuration of a vehicle seat according to an embodiment of the present invention.
[FIG.24] This is a side view schematically showing a configuration of the vehicle seat of FIG. 23.
[FIG.25] This is a diagram schematically showing a configuration of the back face of the seat back.
[FIG.26] This is a diagram schematically showing the effectiveness of the present embodiment.

### DESCRIPTION OF EMBODIMENTS

Embodiment of the present disclosure will be described below referring to the drawings. It should be understood that the present invention is not limited to the following embodiment, and modifications, improvements, and the like can be made as appropriate based on ordinary knowledge of a person skilled in the art without departing from the spirit of the present invention.

### [First Embodiment]

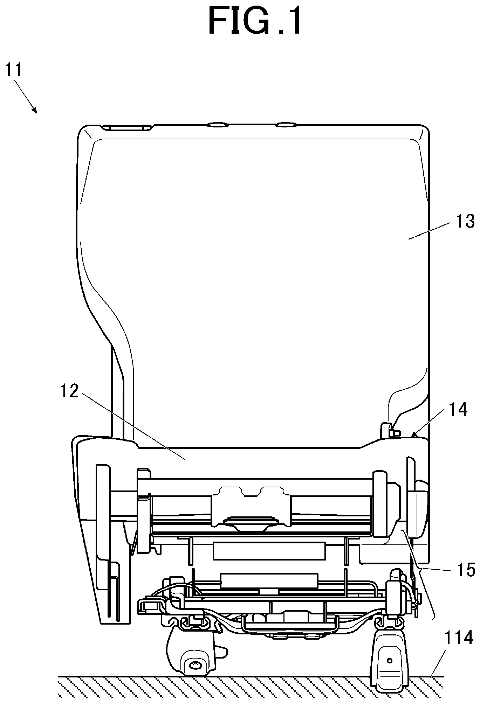

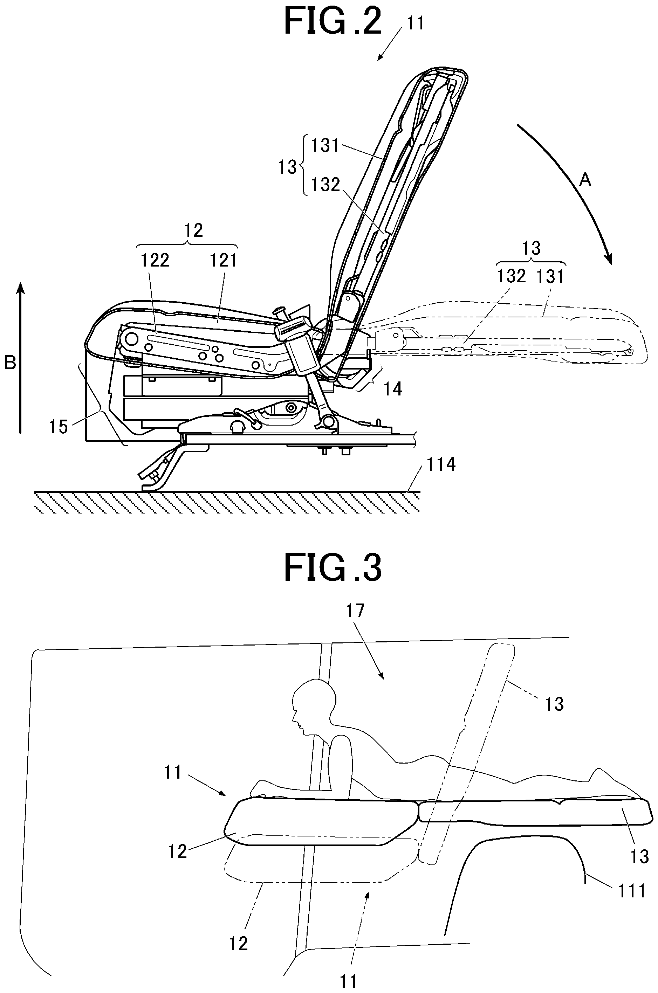

FIG. 1 is a diagram schematically showing a configuration of an embodiment of a vehicle seat 11 of the present invention from the front, FIG. 2 is a diagram schematically showing the configuration of the vehicle seat 11 of FIG. 1 from the side, and FIG. 3 is a diagram schematically showing the advantages of the present embodiment.

The vehicle seat 11 is a vehicle seat for a rear seat of a vehicle and includes a seat cushion 12, a seat back 13, a reclining mechanism part 14, and an elevating mechanism part 15.

The seat cushion 12 is a part of the vehicle seat 11 that is located in front of the rear wheel house 111 of the vehicle and supports buttocks and thighs of an occupant. The seat cushion 12 includes a cushion body 121 formed of a cushioning member that absorbs an impact when the occupant is seated, and a cushion frame 122 formed of a rigid member that supports the cushion body 121 from the inside thereof.

The seat back 13 is a part of the vehicle seat 11 that supports the back of the occupant. Like the seat cushion 12, the seat back 13 includes a seat back body 131 formed of a cushioning member that absorbs an impact, and a seat back frame 132 formed of a rigid member that supports the seat back body 131 from the inside thereof. The seat back 13 is connected to the rear end portion of the seat cushion 12 via a reclining mechanism part 14, which will be described later.

The reclining mechanism part 14 is a part of the vehicle seat 11 that inclines the seat back 13 with respect to the seat cushion 12. The reclining mechanism part 14 also serves to connect the seat back 13 to the rear end portion of the seat cushion 12.

The elevating mechanism part 15 is a part of the vehicle seat 11 capable of lifting and lowering the seat cushion 12 with respect to the vehicle floor surface 114 in the vertical direction (the vertical direction in FIGS. 1 and 2). The elevating mechanism part 15 lifts the seat cushion 12 in the vertical direction when seat arrangement is being, by the reclining mechanism part 14, transformed into the backward falling state in which the seat back 13 falls backward, in conjunction with inclination of the seat back 13 to the backward falling state so that the seat back 13 is positioned above the rear wheel house 111 to avoid interference with the rear wheel house 111. More specifically, in FIG. 2, the elevating mechanism part 15 lifts the seat cushion 12 in the direction B in the drawing together with the seat back 13 connected to the rear end portion of the seat cushion 12 in conjunction with the seat back 13 rotating in the direction A in the drawing and approaching the backward falling state.

In the present specification, the "backward falling state" means that the seat back 13 is in a state nearly horizontal with respect to the vertical direction. Further, in the present specification, "in conjunction with inclination to the backward falling state" means interlocking with the inclination of the seat back 13 after the seat back 13 is inclined and approaches the backward falling state to a predetermined level, in other words, after the seat back 13 is rotated to a predetermined angle with respect to the seat cushion 12. That is, the seat cushion 12 does not start to rise only by the upward seat back 13, which is indicated by the solid line in FIG. 2, being slightly inclined backward. In fact, the elevating mechanism part 15 can lift the seat cushion 12 in the B-direction while maintaining the upward orientation of the seat back 13 of the solid line in FIG. 2 (i.e., without inclination of the seat back 13).

Here, the elevating mechanism part 15 is connected to the cushion frame 122 in the seat cushion 12, and the cushion frame 122 is pushed up in the direction B in the drawing by using a gear mechanism (not shown) that transmits a rotational driving force such as a motor, thereby achieving an upward movement of the seat cushion 12. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 13 rotates at the above-described predetermined angle or more, the switch of the rotational drive source such as the above-described motor is turned on and the rotational driving force is transmitted to the gear mechanism is considered.

In the present embodiment, the elevating mechanism part 15 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 3, the vehicle seat 11 in the seat arrangement before the seat back 13 falls backward, in other words, the seat arrangement in which the seat back 13 is in the "standing state" with respect to the vehicle floor surface 114 (or the "normal seat arrangement") is indicated by a dotted line. In addition, the vehicle seat 11 in the seat arrangement of the backward falling state is indicated by a solid line on the upper side in the vertical direction than the position of the vehicle seat 11 indicated by the dotted line and on the upper side of the rear wheel house 111. When the seat cushion 12 is lifted in conjunction with the seat back 13 approaching the backward falling state, the seat back 13 can be linearly connected to the seat cushion 12 in the horizontal direction without a level difference while avoiding interference of the rear wheel house 111 as shown in FIG. 3. In this case, unlike Patent Document **1,** the entire seat back 13 is completely flat. Consequently, as shown in FIG. 3, the vehicle rear space 17 in the vehicle can be utilized to the maximum extent so that the occupant can lie on his/her stomach in the vehicle, and a highly usable vehicle seat is realized.

Here, it is preferable that a plurality of the vehicle seats 11 are arranged in parallel independently of each other along the vehicle-width direction, and each of a plurality of the elevating mechanism part 15 independently lifts and lowers the seat cushion 12 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

Hereinafter, the armrest of the seat back 13 will be described.

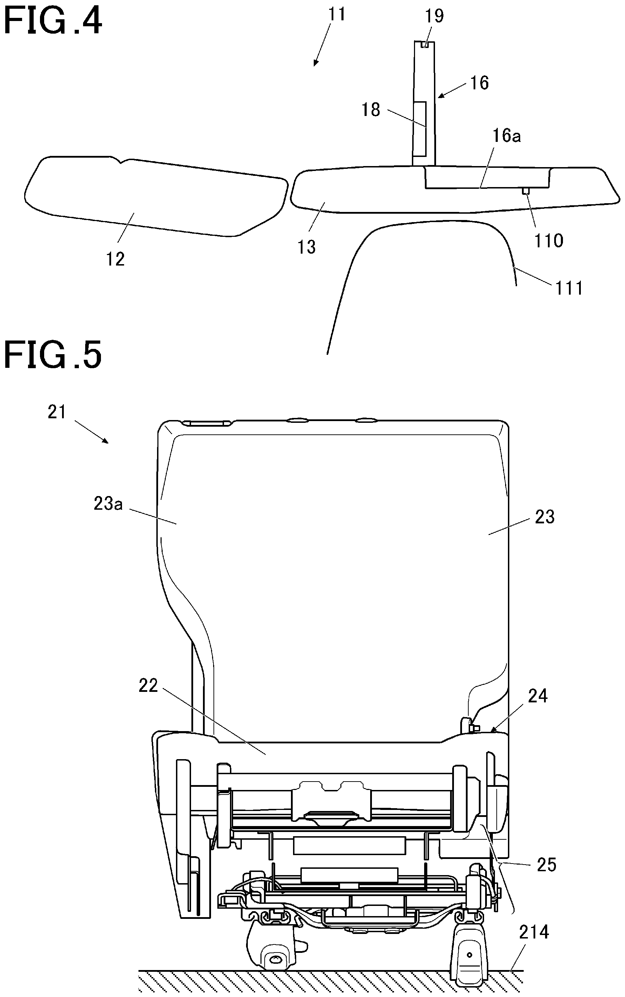

FIG. 4 is a schematic diagram for explaining the function of the armrest 16 in the present embodiment.

In the vehicle seat 11 of the present embodiment, the seat back 13 has an armrest 16 on the side thereof on which an arm of the occupant rests when supporting the back of the occupant, i.e. when the occupant sits on vehicle seat 11 in a normal seat arrangement.

Here, as shown in FIG. 4, it is preferable that the armrest 16 is rotatable, using an end portion of the armrest 16 as a rotation axis, between a raised state in which the armrest protrudes in a direction intersecting a surface of the seat back 13 extending while facing the back of the occupant and an unraised state in which the armrest extends along the surface of the seat back 13, and the seat back 13 further has an armrest storage groove portion 16a having a groove-shape and capable of storing the armrest 16 in the unraised state.

According to such a configuration, it is convenient to switch between the erection (the state of the armrest 16 shown in FIG. 4) and the storage of the armrest 16 as necessary. The armrest 16 in the raised state in a normal seat arrangement has an original function as an armrest, i.e., a place where the arm of the occupant rests. On the other hand, as shown in FIG. 4, the armrest 16 in the raised state in the seat arrangement in the backward falling state plays a convenient predetermined function (to be described later) in the widened vehicle, apart from the original function. When such a predetermined function does not need to be performed, the presence of the armrest 16 can be prevented from becoming an obstacle to effective use of the space inside the vehicle by storing the armrest 16 in the armrest storage groove portion 16a. FIG. 1 to FIG. 3 show the states of the vehicle seat when the armrest 16 is stored in the armrest storage groove portion 16a.

As the rotation mechanism of the armrest 16, for example, a conventionally known rotation mechanism such as a mechanism of the reclining mechanism part 14 that inclins the seat back 13 can be employed.

In the above-described preferred embodiment, it is further preferable that the armrest 16 includes a shade storage portion 18 that can store a shade (not shown) that functions as a partition or a sunshade in the vehicle.

According to such a configuration, there is no need to separately prepare a location for storing the shade when not in use, which contributes to a space saving in the vehicle.

Further, in the above-described preferred embodiment, it is further preferable that the armrest 16 has an attachment mounting part 19 on distal end portion for attaching a predetermined attachment (not shown).

According to such a configuration, a predetermined attachment as desired by the occupant to be used in a vehicle that is wider due to the seat arrangement of the backward falling state can be used by being attached to the distal end portion of the armrest 16 in the raised state.

Here, as a predetermined attachment, in a simple example, a wall hanging with a pocket for holding a small article, a hanger for hanging a towel or the like, or items used by hanging such as a wall calendar can be used. Examples of the attachment mounting part 19 include a hook-shaped attachment member and a pinch-shaped attachment member that sandwiches a small article, and may be merely a screw.

In addition, by providing the attachment mounting part 19 with not only a physical attachment function but also a power supply function, the above-described predetermined attachment can be extended to an appliance or a device that consumes power. For example, the attachment mounting part 19 can be used as a physical attachment portion and a power supply portion for a small electronic device such as a light or a small display device for displaying images, which is an exemplary of the predetermined attachment.

Although the function of the armrest 16 has been described above, the armrest storage groove portion 16a in which the armrest 16 is stored may have the same function.

For example, in the preferred embodiment described above, it is further preferred that the armrest storage groove portion 16a has a power supply port 110 at the bottom that supplies power to the electronic device.

According to such a configuration, when the armrest 16 is raised and a space is present in the armrest storage groove portion 16a as shown in FIG. 4, an electronic device such as a smart phone that needs to be charged can be charged by placing it in the space and connecting it to the power supply port 110. Therefore, there is no need to separately secure a place for charging electronic device, which contributes to a space saving in the vehicle.

The above is the explanation of the first embodiment of the disclosure.

In the above explanation of embodiment, the vehicle seat 11 for the rear seat of the vehicle has been described, but the "rear seat" here simply means a seat on the rear side of the driver's seat. Therefore, in the case of a vehicle in which a plurality of seats are arranged in the traveling direction of the vehicle (for example, in the case of an elongated vehicle such as a bus), the present invention can also be applied to a seat other than the rearmost seat.

### [Second Embodiment]

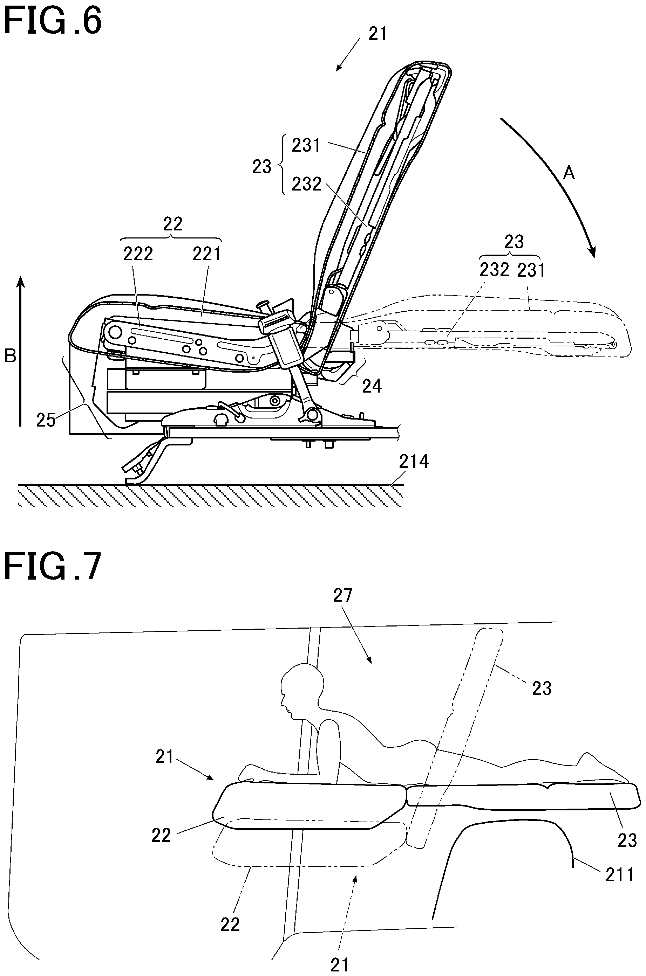

FIG. 5 is a diagram schematically showing the configuration of the vehicle seat 21 according to an embodiment of the present invention from the front, FIG. 6 is a diagram schematically showing the configuration of the vehicle seat 21 of FIG. 5 from the side, and FIG. 7 is a diagram schematically showing the advantages of the present embodiment.

The vehicle seat 21 is a vehicle seat for a rear seat of a vehicle, and includes a seat cushion 22, a seat back 23, a reclining mechanism part 24, and an elevating mechanism part 25.

The seat cushion 22 is a part of the vehicle seat 21 that is located in front of the rear wheel house 211 of the vehicle and supports buttocks and thighs of the occupant. The seat cushion 22 includes a cushion body 221 formed of a cushioning member that absorbs an impact when the occupant is seated, and a cushion frame 222 formed of a rigid member that supports the cushion body 221 from the inside thereof.

The seat back 23 is a part of the vehicle seat 21 that supports the back of the occupant. Like the seat cushion 22, the seat back 23 includes a seat back body 231 formed of a cushioning member that absorbs an impact, and a seat back frame 232 formed of a rigid member that supports the seat back body 231 from the inside thereof. The seat back 23 is connected to a rear end portion of the seat cushion 22 via a reclining mechanism part 24, which will be described later.

The reclining mechanism part 24 is a part of the vehicle seat 21 that inclines the seat back 23 with respect to the seat cushion 22. The reclining mechanism part 24 also serves to connect the seat back 23 to the rear end portion of the seat cushion 22.

The elevating mechanism part 25 is a part of the vehicle seat 21 capable of lifting and lowering the seat cushion 22 with respect to the vehicle floor surface 214 in the vertical direction (the vertical direction in FIGS. 5 and 6). The elevating mechanism part 25 lifts the seat cushion 22 in the vertical direction when seat arrangement is being, by the reclining mechanism part 24, transformed into the backward falling state in which the seat back 23 falls backward, in conjunction with the inclination of the seat back 23 to the backward falling state so that the seat back 23 is positioned above the rear wheel house 211 to avoid interference with the rear wheel house 211. More specifically, in FIG. 6, the elevating mechanism part 25 lifts the seat cushion 22 in the direction B in the drawing together with the seat back 23 connected to the rear end portion of the seat cushion 22 in conjunction with the seat back 23 rotating in the direction A in the drawing and approaching the backward falling state.

In the present specification, the "backward falling state" means that the seat back 23 is in a state nearly horizontal with respect to the vertical direction. Further, in the present specification, "in conjunction with inclination to the backward falling state" means interlocking with the inclination of the seat back 23 after the seat back 23 is inclined and approaches the backward falling state to a predetermined level, in other words, after the seat back 23 is rotated to a predetermined angle with respect to the seat cushion 22. That is, the seat cushion 22 does not start to rise only by the upward seat back 23, which is indicated by the solid line in FIG. 6, being slightly inclined backward. In fact, the elevating mechanism part 25 can lift the seat cushion 22 in the B-direction while maintaining the upward orientation of the seat back 23 of the solid line in FIG. 6 (i.e., without inclination of the seat back 23).

Here, the elevating mechanism part 25 is connected to the cushion frame 222 in the seat cushion 22, and the cushion frame 222 is pushed up in the direction B in the drawing by using a gear mechanism (not shown) that transmits a rotational driving force such as a motor, thereby achieving an upward movement of the seat cushion 22. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 23 rotates at the above-described predetermined angle or more, the switch of the rotational drive source such as the above-described motor is turned on and the rotational driving force is transmitted to the gear mechanism is considered.

In the present embodiment, the elevating mechanism part 25 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 7, the vehicle seat 21 in the seat arrangement before the seat back 23 falls backward, in other words, the seat arrangement in which the seat back 23 is in the "standing state" with respect to the vehicle floor surface 214 (or the "normal seat arrangement") is indicated by a dotted line. In addition, the vehicle seat 21 in the seat arrangement of the backward falling state is indicated by a solid line on the upper side in the vertical direction than the position of the vehicle seat 21 indicated by the dotted line and on the upper side of the rear wheel house 211. When the seat cushion 22 is lifted in conjunction with the seat back 23 approaching the backward falling state, the seat back 23 can be linearly connected to the seat cushion 22 in the horizontal direction without a level difference while avoiding interference of the rear wheel house 211 as shown in FIG. 7. In this case, unlike Patent Document **1,** the entire seat back 23 is completely flat. Consequently, as shown in FIG. 7, the vehicle rear space 27 in the vehicle can be utilized to the maximum extent so that the occupant can lie on his/her stomach in the vehicle, and a highly usable vehicle seat is realized.

Here, it is preferable that a plurality of the vehicle seats 21 are arranged in parallel independently of each other along the vehicle-width direction, and each of a plurality of the elevating mechanism part 25 independently lifts and lowers the seat cushion 22 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

Hereinafter, the cushion bank portion included in the seat cushion 22 will be described.

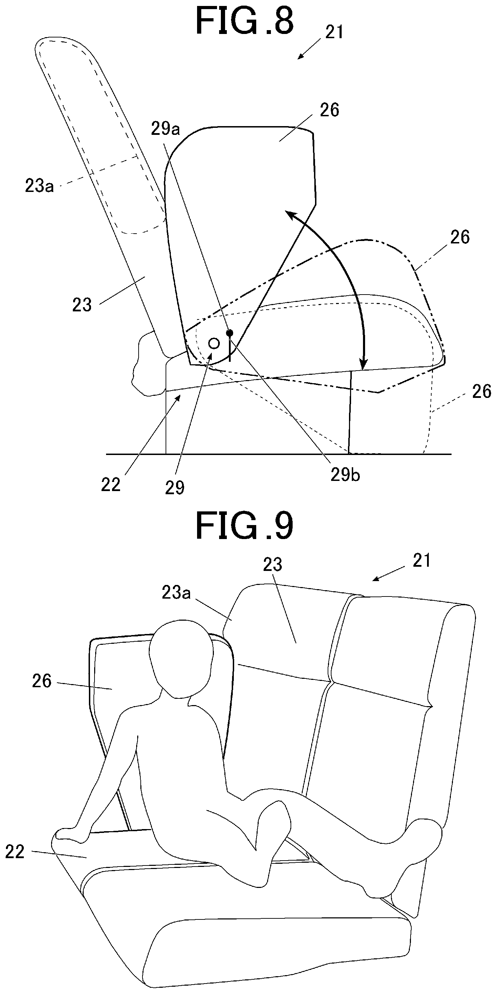

FIG. 8 is a schematic diagram for explaining the function of the cushion bank portion 26 in the present embodiment, and FIG. 9 is a diagram schematically showing the advantages of the present embodiment.

In the vehicle seat 21 of the present embodiment, the seat cushion 22 has a cushion bank portion 26 that occupies one side of the seat cushion 22. The cushion bank portion is rotatable with its rear end portion as a rotation axis, separately from the rest of the seat cushion 22 except for the cushion bank portion.

With this rotation, the cushion bank portion 26 functions as an armrest on which the arm of the occupant rests when the seat cushion 22 supports buttocks and thighs of the occupant. This eliminates the need for separate armrests and contributes to a space saving in the vehicle.

Here, as shown in FIG. 8, the seat cushion 22 has a bank portion rotation mechanism 29 for rotating the cushion bank portion 26 separately from the rest of the seat cushion 22 except for the cushion bank portion. As the bank portion rotation mechanism 29, for example, a conventionally known rotation mechanism such as a mechanism of the reclining mechanism part 24 that inclines the seat back 23 can be employed.

At this time, the seat cushion 22 preferably further includes a rotation position fixing mechanism that fixes the rotation position when the cushion bank portion 26 is rotated separately from the rest of the seat cushion 22.

According to such a configuration, the attitude of the cushion bank portion 26 is stabilized. In particular, the stabilization of the attitude improves the function of the cushion bank portion 26 as an armrest. Here, as the rotation position fixing mechanism, a conventionally known rotation position fixing mechanism can be employed. For example, as shown in FIG. 8, a rotation position fixing mechanism may be employed that includes a locking pin 29a that is inserted into the bank portion rotation mechanism 29 to stop rotating of the cushion bank portion 26 by the bank portion rotation mechanism 29, and a strip 29b that connects to the locking pin 29a. In this case, the locking pin 29a is inserted by the occupant to fix the rotation position of the cushion bank portion 26. In addition, when the strip 29b is pulled by the occupant and the locking pin 29a is pulled out of the bank portion rotation mechanism 29, the cushion bank portion 26 is released from being fixed in the rotation position by locking pin 29a, so that the cushion bank portion 26 can be rotated.

Further, as shown in FIGS. 5, 8, and 9, the seat back 23 preferably has an overhang portion 23a on the side of the seat back 23 located in the rotational direction of the cushion bank portion 26, which abuts against the rotated cushion bank portion 26 to prevent further rotation of the cushion bank portion 26.

According to this configuration, the presence of the overhang portion 23a further stabilizes the attitude of cushion bank portion 26. In this case, the cushion bank portion 26 is rotatable in the direction of the doubleheaded arrow in FIG. 8 between a non-rotating state (the state of the cushion bank portion 26 shown by the dotted line in FIG. 8) occupying one side of the seat cushion 22 in a manner aligned with the rest of the seat cushion 22, and an abutting state (the state of the cushion bank portion 26 shown by the solid line in FIG. 8) abutting against the overhang portion 23a of the seat back 23.

In particular, the cushion bank portion 26 close to the abutting state may function not only as an armrest but also as a backrest of the occupant, as shown in FIG. 9. Stabilization of the attitude of the cushion bank portion 26 due to the presence of the overhang portion 23a is particularly beneficial when used as a backrest of the occupant because of the greater loading on the cushion bank portion 26 than when used simply as an armrest.

The overhang portion 23a of the seat back 23 is responsible for regulating the rotatable angle range of the cushion bank portion 26 in this manner, but since the seat back 23 is inclinable to the backward falling state, the rotatable angle range of the cushion bank portion 26 also varies depending on the inclined state of the seat back 23. For example, the cushion bank portion 26 is rotatable in an angle range of approximately 0° to 90° C in a seat arrangement in a normal state, while the cushion bank portion 26 is rotatable in an angle range of approximately 0° to 180° in a seat arrangement in a backward falling state.

The second embodiment of the present disclosure is described above.

In the above explanation of embodiment, the vehicle seat 21 for the rear seat of the vehicle has been described, but the "rear seat" here simply means a seat on the rear side of the driver's seat. Therefore, in the case of a vehicle in which a plurality of seats are arranged in the traveling direction of the vehicle (for example, in the case of an elongated vehicle such as a bus), the present invention can also be applied to a seat other than the rearmost seat.

### [Third Embodiment]

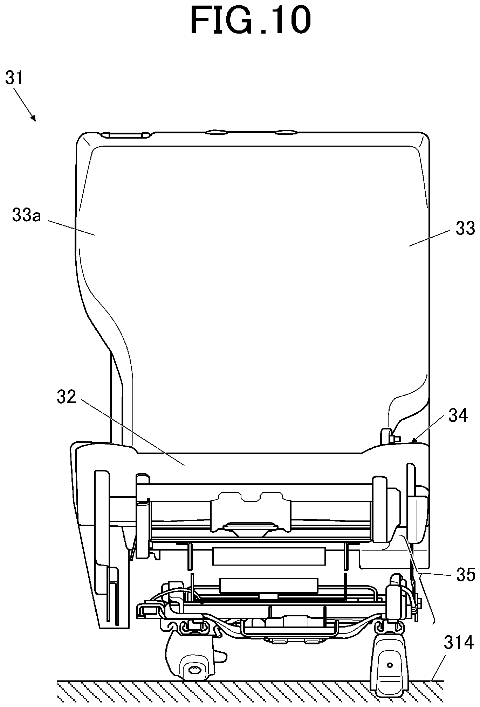

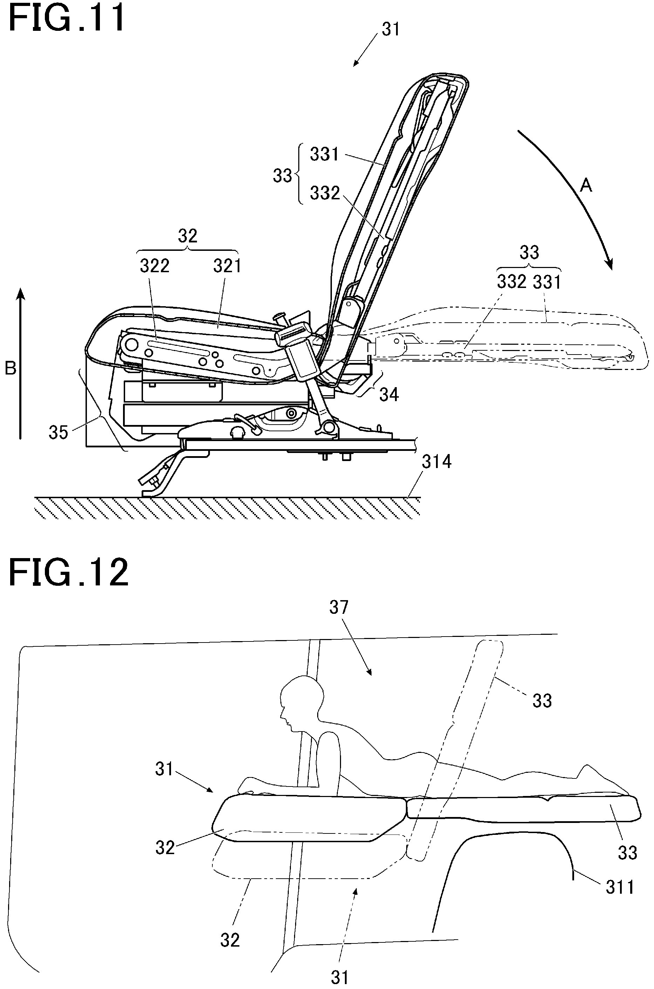

FIG. 10 is a diagram schematically showing the configuration of the vehicle seat 31 of an embodiment of the present invention from the front, FIG. 11 is a diagram schematically showing the configuration of the vehicle seat 31 of FIG. 10 from the side, and FIG. 12 is a diagram schematically showing the advantages of the present embodiment.

The vehicle seat 31 is a vehicle seat for a rear seat of a vehicle, and includes a seat cushion 32, a seat back 33, a reclining mechanism part 34, and an elevating mechanism part 35.

The seat cushion 32 is a part of the vehicle seat 31 that is located in front of the rear wheel house 311 of the vehicle and supports buttocks and thighs of the occupant. The seat cushion 32 includes a cushion body 321 formed of a cushioning member that absorbs an impact when the occupant is seated, and a cushion frame 322 formed of a rigid member that supports the cushion body 321 from the inside thereof.

The seat back 33 is the part of the vehicle seat 31 that supports the back of occupant. Like the seat cushion 32, the seat back 33 includes a seat back body 331 formed of a cushioning member that absorbs an impact, and a seat back frame 332 formed of a rigid member that supports the seat back body 331 from the inside thereof. The seat back 33 is connected to a rear end portion of the seat cushion 32 via a reclining mechanism part 34, which will be described later.

The reclining mechanism part 34 is a part of the vehicle seat 31 that inclines the seat back 33 with respect to the seat cushion 32. The reclining mechanism part 34 also serves to connect the seat back 33 to the rear end portion of the seat cushion 32.

The elevating mechanism part 35 is a part of the vehicle seat 31 capable of lifting and lowering the seat cushion 32 with respect to the vehicle floor surface 314 in the vertical direction (the vertical direction in FIGS. 10 and 11). The elevating mechanism part 35 lifts the seat cushion 32 in the vertical direction when seat arrangement is being, by the reclining mechanism part 34, transformed into the backward falling state in which the seat back 33 falls backward, in conjunction with the inclination of the seat back 33 to the backward falling state so that the seat back 33 is positioned above the rear wheel house 311 to avoid interference with the rear wheel house 311. More specifically, in FIG. 11, the elevating mechanism part 35 lifts the seat cushion 32 in the direction B in the drawing together with the seat back 33 connected to the rear end portion of the seat cushion 32 in conjunction with the seat back 33 rotating in the direction A in the drawing and approaching the backward falling state.

In the present specification, the "backward falling state" means that the seat back 33 is in a state nearly horizontal with respect to the vertical direction. Further, in the present specification, "in conjunction with inclination to the backward falling state" means interlocking with the inclination of the seat back 33 after the seat back 33 is inclined and approaches the backward falling state to a predetermined level, in other words, after the seat back 33 is rotated to a predetermined angle with respect to the seat cushion 32. That is, the seat cushion 32 does not start to rise only by the upward seat back 33, which is indicated by the solid line in FIG. 11, being slightly inclined backward. In fact, the elevating mechanism part 35 can lift the seat cushion 32 in the B-direction while maintaining the upward orientation of the seat back 33 of the solid line in FIG. 11 (i.e., without inclination of the seat back 33).

Here, the elevating mechanism part 35 is connected to the cushion frame 322 in the seat cushion 32, and the cushion frame 322 is pushed up in the direction B in the drawing by using a gear mechanism (not shown) that transmits a rotational driving force such as a motor, thereby achieving an upward movement of the seat cushion 32. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 33 rotates at the above-described predetermined angle or more, the switch of the rotational drive source such as the above-described motor is turned on and the rotational driving force is transmitted to the gear mechanism is considered.

In the present embodiment, the elevating mechanism part 35 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 12, the vehicle seat 31 in the seat arrangement before the seat back 33 falls backward, in other words, the seat arrangement in which the seat back 33 is in the "standing state" with respect to the vehicle floor surface 314 (or the "normal seat arrangement") is indicated by a dotted line. In addition, the vehicle seat 31 in the seat arrangement of the backward falling state is indicated by a solid line on the upper side in the vertical direction than the position of the vehicle seat 31 indicated by the dotted line and on the upper side of the rear wheel house 311. When the seat cushion 32 is lifted in conjunction with the seat back 33 approaching the backward falling state, the seat back 33 can be linearly connected to the seat cushion 32 in the horizontal direction without a level difference while avoiding interference of the rear wheel house 311 as shown in FIG. 12. In this case, unlike Patent Document 1, the entire seat back 33 is completely flat. Consequently, as shown in FIG. 12, the vehicle rear space 37 in the vehicle can be utilized to the maximum extent so that the occupant can lie on his/her stomach in the vehicle, and a highly usable vehicle seat is realized.

Here, it is preferable that a plurality of the vehicle seats 31 are arranged in parallel independently of each other along the vehicle-width direction, and each of a plurality of the elevating mechanism part 35 independently lifts and lowers the seat cushion 32 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

Hereinafter, the shade storage portion and the engaging part of the seat cushion 32 or the seat back 33 will be described.

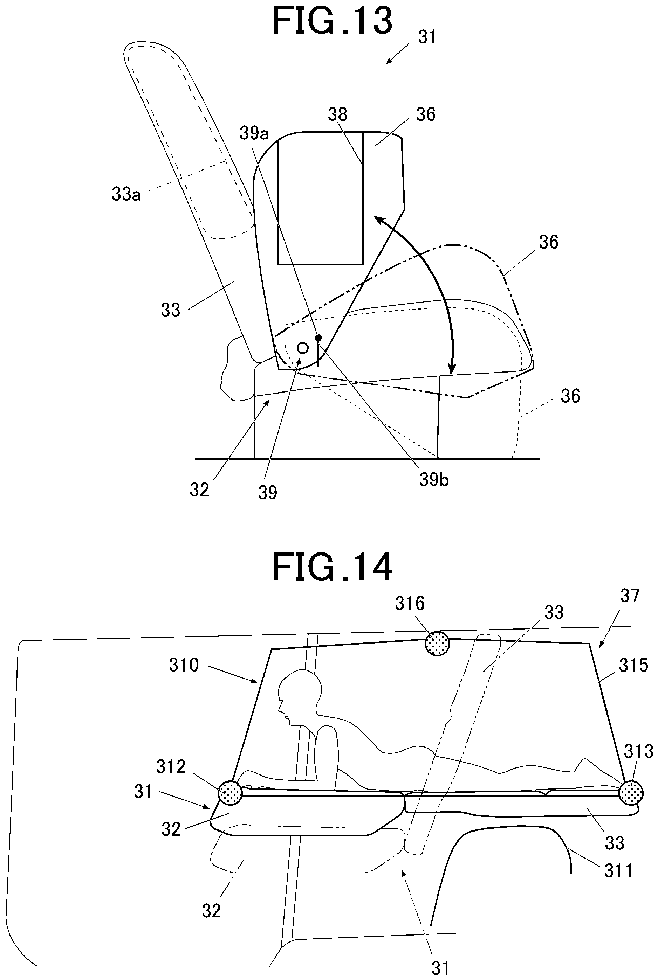

FIG. 13 is a schematic diagram for explaining the shade storage portion 38 in the present embodiment, and FIG. 14 is a diagram schematically showing a state in which the shade 310 stored in the shade storage portion 38 of FIG. 13 is used in a manner surrounding the occupant in the full flat state of FIG. 12.

In the vehicle seat 31 of the present embodiment, as shown in FIG. 13, the seat cushion 32 or the seat back 33 has a shade storage portion 38 that can store the shade 310 of FIG. 14 that functions as a partition or a sunshade in the vehicle. As shown in FIG. 14, the seat cushion 32 or the seat back 33 also has engaging parts 312 and 313 that engage with a part of the shade 310 in the unfolded state to support the shade 310 when the shade 310 is unfolded and used as a partition or a sunshade in the vehicle.

With such a configuration, for example, as shown in FIG. 14, in the full flat state, when the shade 310 stored in the shade storage portion 38 is widened and a part thereof is engaged with the engaging parts 312 and 313 to support the shade 310, the space covered by the shade can be maximally expanded.

Here, as shown in FIG. 13, it is preferable that the seat cushion 32 has a cushion bank portion 36 that occupies one side of the seat cushion 32 and is rotatable, using a rear end portion of the cushion bank portion 36 as a rotation axis, separately from the rest of the seat cushion 32 except for the cushion bank portion 36, and the cushion bank portion 36 has a shade storage portion 38 that can store a shade 310 that functions as a partition or a sunshade in the vehicle.

According to such a configuration, when the seat cushion 32 supports buttocks and thighs of the occupant, the cushion bank portion 36 functions as an armrest on which an arm of the occupant rests, and there is no need to separately prepare an armrest. Further, by providing the cushion bank portion 36 with the shade storage portion 38, there is no need to separately prepare a location for storing the shade 310 when not in use. Therefore, further a space saving in the vehicle is realized.

Although FIG. 13 shows a configuration in which the seat cushion 32 (more precisely, the cushion bank portion 36 included in the seat cushion 32) includes the shade storage portion 38, as an example, the present disclosure may be one in which the seat back includes the shade storage portion.

Here, as shown in FIG. 13, the seat cushion 32 has a bank portion rotation mechanism 39 for rotating the cushion bank portion 36 separately from the rest of the seat cushion 32 except for the cushion bank portion. As the bank portion rotation mechanism 39, for example, a conventionally known rotation mechanism such as a mechanism of the reclining mechanism part 34 that inclines the seat back 33 can be employed.

At this time, the seat cushion 32 preferably further includes a rotation position fixing mechanism that fixes the rotation position when the cushion bank portion 36 is rotated separately from the rest of the seat cushion 32.

According to such a configuration, the attitude of the cushion bank portion 36 is stabilized. In particular, the stabilization of the attitude improves the function of the cushion bank portion 36 as an armrest. Here, as the rotation position fixing mechanism, a conventionally known rotation position fixing mechanism can be employed. For example, as shown in FIG. 13, a rotation position fixing mechanism may be employed that includes a locking pin 39a that is inserted into the bank portion rotation mechanism 39 to stop rotating of the cushion bank portion 36 by the bank portion rotation mechanism 39, and a strip 39b that connects to the locking pin 39a. In this case, the locking pin 39a is inserted by the occupant to fix the rotation position of the cushion bank portion 36. In addition, when the strip 39b is pulled by the occupant and the locking pin 39a is pulled out of the bank portion rotation mechanism 39, the cushion bank portion 36 is released from being fixed in the rotation position by locking pin 39a, so that the cushion bank portion 36 can be rotated.

Further, as shown in FIGS. 10 and 13, the seat back 33 preferably has an overhang portion 33a on the side of the seat back 33 located in the rotational direction of the cushion bank portion 36, which abuts against the rotated cushion bank portion 36 to prevent further rotation of the cushion bank portion 36.

According to this configuration, the presence of the overhang portion 33a further stabilizes the attitude of cushion bank portion 36. In this case, the cushion bank portion 36 is rotatable in the direction of the doubleheaded arrow in FIG. 13 between a non-rotating state (the state of the cushion bank portion 36 shown by the dotted line in FIG. 13) occupying one side of the seat cushion 32 in a manner aligned with the rest of the seat cushion 32, and an abutting state (the state of the cushion bank portion 36 shown by the solid line in FIG. 13) abutting against the overhang portion 33a of the seat back 33.

The overhang portion 33a of the seat back 33 is responsible for regulating the rotatable angle range of the cushion bank portion 36 in this manner, but since the seat back 33 is inclinable to the backward falling state, the rotatable angle range of the cushion bank portion 36 also varies depending on the inclined state of the seat back 33. For example, the cushion bank portion 36 is rotatable in an angle range of approximately 0° to 90° C in a seat arrangement in a normal state, while the cushion bank portion 36 is rotatable in an angle range of approximately 0° to 180° in a seat arrangement in a backward falling state.

Hereinafter, the shade 310 will be described in more detail.

As shown in FIG. 14, the seat cushion 32 has an engaging part 312, the seat back 33 has an engaging part 313, and in addition to the two engaging parts 312 and 313, an engaging part 316 is also provided on the ceiling of the vehicle. Although not shown in FIG. 14, a further engaging part may be provided on a wall of the vehicle, for example, a quarter trim box on the wall side.

In this way, a plurality of engaging parts are provided at a plurality of locations in the vehicle to engage with a part of the shade 310, thereby stabilizing the attitude of the shade 310. For example, the shade 310 may be used in the form of a tent.

At this time, it is preferable that the shade storage portion 38 be capable of storing a shade having a foldable skeleton 315 as the shade 310.

According to such a configuration, the presence of the skeleton 315 stabilizes the shape of the shade 310 when it is unfolded and used. However, when the skeleton 315 is present in the shade 310, the shade 310 at the time of storage becomes bulky, but when the skeleton 315 can be stored in the shade storage portion 38 because it can be folded, there is no effect on a space saving in the vehicle by the shade storage portion.

The third embodiment of the present disclosure is described above.

In the above explanation of embodiment, the vehicle seat 31 for the rear seat of the vehicle has been described, but the "rear seat" here simply means a seat on the rear side of the driver's seat. Therefore, in the case of a vehicle in which a plurality of seats are arranged in the traveling direction of the vehicle (for example, in the case of an elongated vehicle such as a bus), the present invention can also be applied to a seat other than the rearmost seat.

### [Fourth Embodiment]

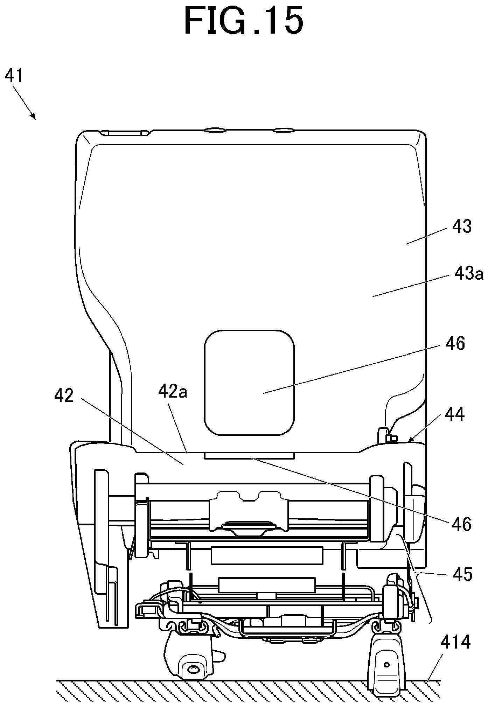

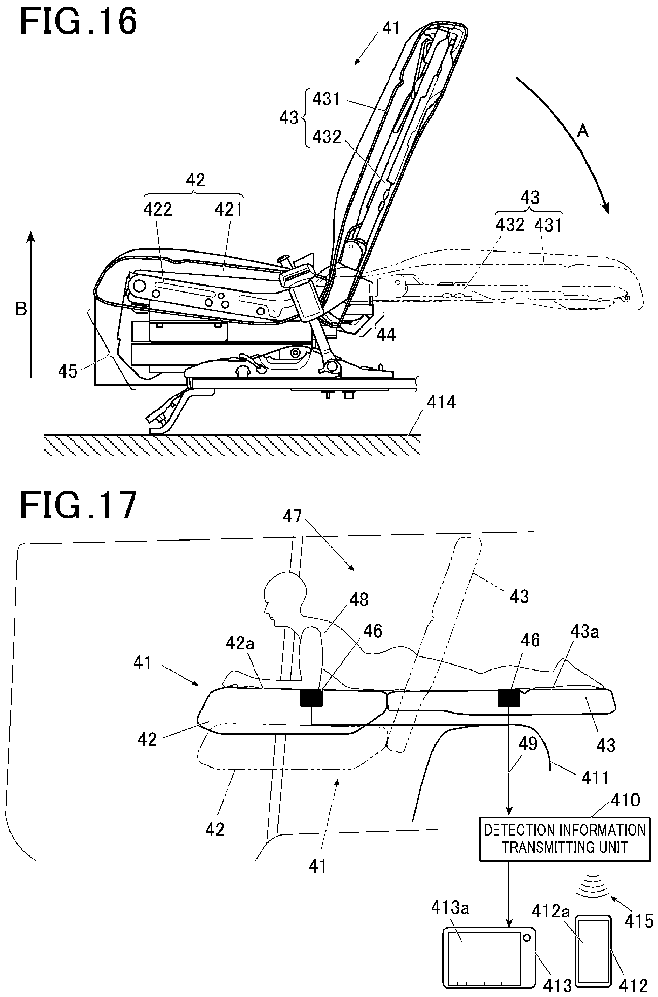

FIG. 15 is a diagram schematically showing the configuration of the vehicle seat 41 of an embodiment of the present invention from the front, FIG. 16 is a diagram schematically showing the configuration of the vehicle seat 41 of FIG. 15 from the side, and FIG. 17 is a diagram schematically showing the advantages of the present embodiment. In FIGS. 15 to 17, for the sake of simplification of the description, some of the components are not shown.

The vehicle seat 41 is a vehicle seat for a rear seat of a vehicle and mainly includes a seat cushion 42, a seat back 43, a reclining mechanism part 44, an elevating mechanism part 45, and a sensor 46.

The seat cushion 42 is a part of the vehicle seat 41 that is located in front of the rear wheel house 411 of the vehicle and supports buttocks and thighs of the occupant. The seat cushion 42 includes a cushion body 421 formed of a cushioning member that absorbs an impact when the occupant is seated, and a cushion frame 422 formed of a rigid member that supports the cushion body 421 from the inside thereof. On the other hand, like the seat cushion 42, the seat back 43 includes a seat back body 431 formed of a cushioning member that absorbs impact, and a seat back frame 432 formed of a rigid member that supports the seat back body 431 from the inside thereof.

The seat back 43 is a part of the vehicle seat 41 that supports the back of the occupant. The seat back 43 is connected to a rear end portion of the seat cushion 42 via a reclining mechanism part 44, which will be described later.

The reclining mechanism part 44 is a part of the vehicle seat 41 that inclines the seat back 43 with respect to the seat cushion 42. The reclining mechanism part 44 also serves to connect the seat back 43 to the rear end portion of the seat cushion 42.

The elevating mechanism part 45 is a part of the vehicle seat 41 capable of lifting and lowering the seat cushion 42 with respect to the vehicle floor surface 414 in the vertical direction (the vertical direction in FIGS. 15 and 16). The elevating mechanism part 45 lifts the seat cushion 42 in the vertical direction when seat arrangement is being, by the reclining mechanism part 44, transformed into the backward falling state in which the seat back 43 falls backward, in conjunction with inclination of the seat back 43 to the backward falling state so that the seat back 43 is positioned above the rear wheel house 411 to avoid interference with the rear wheel house 411. More specifically, in FIG. 16, the elevating mechanism part 45 lifts the seat cushion 42 in the direction B in the drawing together with the seat back 43 connected to the rear end portion of the seat cushion 42 in conjunction with the seat back 43 rotating in the direction A in the drawing and approaching the backward falling state.

In the present specification, the "backward falling state" means that the seat back 43 is in a state nearly horizontal with respect to the vertical direction. Further, in the present specification, "in conjunction with inclination to the backward falling state" means interlocking with the inclination of the seat back 43 after the seat back 43 is inclined and approaches the backward falling state to a predetermined level, in other words, after the seat back 43 is rotated to a predetermined angle with respect to the seat cushion 42. That is, the seat cushion 42 does not start to rise only by the upward seat back 43, which is indicated by the solid line in FIG. 16, being slightly inclined backward. In fact, the elevating mechanism part 45 can lift the seat cushion 42 in the B-direction while maintaining the upward orientation of the seat back 43 of the solid line in FIG. 16 (i.e., without inclination of the seat back 43).

Here, the elevating mechanism part 45 is connected to the cushion frame 422 in the seat cushion 42, and the cushion frame 422 is pushed up in the direction B in the drawing by using a gear mechanism (not shown) that transmits a rotational driving force such as a motor, thereby achieving an upward movement of the seat cushion 42. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 43 rotates at the above-described predetermined angle or more, the switch of the rotational drive source such as the above-described motor is turned on and the rotational driving force is transmitted to the gear mechanism is considered.

In the present embodiment, the elevating mechanism part 45 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 17, the vehicle seat 41 in the seat arrangement before the seat back 43 falls backward, in other words, the seat arrangement in which the seat back 43 is in the "standing state" with respect to the vehicle floor surface 414 (or the "normal seat arrangement") is indicated by a dotted line. In addition, the vehicle seat 41 in the seat arrangement of the backward falling state is indicated by a solid line on the upper side in the vertical direction than the position of the vehicle seat 41 indicated by the dotted line and on the upper side of the rear wheel house 411. When the seat cushion 42 is lifted in conjunction with the seat back 43 approaching the backward falling state, the seat back 43 can be linearly connected to the seat cushion 42 in the horizontal direction without a level difference while avoiding interference of the rear wheel house 411 as shown in FIG. 17. In this case, unlike Patent Document 1, the entire seat back 43 is completely flat. Consequently, as shown in FIG. 17, the vehicle rear space 47 in the vehicle can be utilized to the maximum extent so that the occupant can lie on his/her stomach in the vehicle, and a highly usable vehicle seat is realized.

Here, it is preferable that a plurality of the vehicle seats 41 are arranged in parallel independently of each other along the vehicle-width direction, and each of a plurality of the elevating mechanism part 45 independently lifts and lowers the seat cushion 42 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

The vehicle seat 41 of the present embodiment further includes two sensors 46 mounted on the respective seat surface 42a and 43a of the seat cushion 42 and the seat back 43. In the vehicle seat 41 of the present embodiment, the sensor 46 is provided on each seat surface 42a and 43a of the seat cushion 42 and the seat back 43, but the present invention is not limited thereto, and the sensor 46 may be provided on either the seat cushion 42 or the seat back 43. The sensor 46 is electrically connected to transmit the detected information as an electrical signal. As described above, a plurality of the vehicle seat 41 of the present embodiment arranged in parallel along the vehicle-width direction. Therefore, it is preferable to provide the sensor 46 in each vehicle seat 41. By increasing the number of sensors 46 in the vehicle, detection performance for detecting the presence of the user 48 is improved, and occurrence of detection errors or the like can be suppressed.

The sensor 46 of the vehicle seat 41 of the present embodiment functions as a human detection sensor after the seat back 43 is transformed into a seat arrangement that is in the backward falling state. On the other hand, it functions as a biometric sensor for acquiring biometric information of the seated occupant when the seat back 43 is transformed into a seat arrangement that is in the standing state.

The human detection sensor detects, for example, a motion of a person, heat, or the like, and an infrared detection sensor has been known. The infrared human detection sensor is capable of detecting infrared rays caused by heat (body temperature) radiated from the human body, and can recognize the presence of a person by the amount of radiation and a change in the amount of radiation of these infrared rays.

The sensor 46 functioning as a human detection sensor, for example, when detecting the presence of the user 48 such as a child playing in the vehicle rear space 47 after the transformation, can convert the detected sensor into an electric signal and transmit the electric signal to the outside of the vehicle seat 41 via a transmission means such as the detection information transmitting unit 410 (which will be described later in detail).

The human detection sensor can detect anything other than a human as long as it can emit infrared rays, and can also detect movement of a small animal such as a dog or a cat, for example. As such, these small animals can be included in the "user" herein. That is, the presence of a dog or the like in the vehicle rear space 47 may be detected by the human detection sensor.

Further, the human detection sensor is not limited to the infrared sensor described above, and may be any sensor that detects the presence of the user 48 by using various sensors known in the art. For example, a contact detection sensor that detects a change in the electric resistivity of the user 48 in direct contact with a seat surface 42a or the like of the seat cushion 42, a pressure detection sensor that detects a load applied to the seat surface 42a or the like, or the like may be used. Since the contact detection sensor, the pressure detection sensor, or the like needs to directly touch a part of the arm, the foot, or the like of the user 48 for detection, the user 48 can be reliably detected when the user is lying down on the seat cushion 42 and the seat back 43.

However, when the user 48 deviates from the installation position of the sensor 46 installed in the seat surface 42a or the like, it is difficult to detect the presence of the user 48. Therefore, it is preferable to use a non-contact infrared type human detection sensor. Alternatively, a plurality of types of sensors such as an infrared type human detection sensor, a contact detection sensor, and a pressure detection sensor may be used in combination. Thus, the detection performance of the user 8 can be improved.

On the other hand, a biometric sensor is conventionally known, and for example, a contact-type biometric sensor that measures an amount of electricity, an amount of electricity resistivity, the change amount, or the like flowing between a pair of electrodes, or a non-contact-type biometric sensor that is capable of emitting light, electromagnetic waves, or the like from a LED irradiating portion toward the skin, reflecting the light by a blood vessel, and detecting the light that comes out of the skin, or the like, is assumed to be used. Descriptions of other details of the configuration and the function of the biometric sensor that functions as the biometric sensor and acquires the biometric information are omitted.

As described above, the vehicle seat 41 of the present embodiment includes a sensor 46 having two functions. Therefore, it is possible to arbitrarily switch whether the sensor 46 functions as a human detection sensor or a biometric sensor. The switching of such functions can also be performed manually, for example. In other words, the occupant or the user 48 can select an operation switch (not shown) for function switching provided in the vehicle seat 41 to acquire or detect the information by themselves.

On the other hand, the function of the sensor 46 can be automatically switched according to the seat arrangement of the seat back 43. That is, when the seat back 43 is in the "standing state" (normal seat arrangement), it is made to function as a biometric sensor for acquiring biometric information such as blood flow and heart rate of the occupant when seated in the rear seat, and when the seat back 43 is inclined backward by the reclining mechanism part 44 and is transformed into the seat arrangement in the completely flat state in the "backward falling state", it is made to function as a human detection sensor for detecting the presence of the user 48. The function switching by the sensor 46 can be automatically performed by detecting the transformation state of the seat arrangement of the seat back 43 by a known position sensor or the like.

Further, as described above, the vehicle seat 41 includes the detection information transmitting unit 10 capable of transmitting the detection information 49 related to the presence or absence of the user 48 using the vehicle rear space 47 detected by the sensor 46 to the inside of the vehicle or the outside of the vehicle.

When the presence or absence of the user 48 is detected by the sensor 46, the detection information transmitting unit 410 has a function of transmitting the detection information 49 as an electric signal to a predefined transmission destination outside of the vehicle seat 41. For example, the detection information transmitting unit 410 may be built in the seat cushion 42 or the seat back 43 in which the sensor 46 is installed, or may be electrically connected to the sensor 46 and installed outside the seat cushion 42 or the seat back 43.

Further, the transmission destination of the detection information 49 transmitted from the detection information transmitting unit 410 is, for example, a vehicle information device terminal 412 which is installed in a console panel in front of a driver's seat of the vehicle and which normally also functions as a car navigation system, and the content of the detection information 49 can be displayed on the terminal screen 412a of the vehicle information device terminal 412. In this case, the detection information transmitting unit 410 and the vehicle information device terminal 412 are connected in a wired manner in order to transmit the detection information 49.

Further, the information may be transmitted from the detection information transmitting unit 410 to the portable information terminal 413 such as a smart phone through the wireless communication line 415, and the content of the detection information 49 may be displayed on the terminal screen 413a of the portable information terminal 413. In this case, an electric communication circuit such as Wi-Fi (registered trademark) or the internet can be used as the wireless communication line 415. In particular, it is preferable to use Wi-Fi mainly used to transmit and receive data over a short distance.

When the vehicle seat 41 includes the detection information transmitting unit 410, for example, when the guardian is at a rest in the driver's seat or the passenger's seat in front of the vehicle and the child is playing or falling on the vehicle rear space 47 in a completely flat state, the presence of the child (the user 48) can be monitored on the terminal screen 412a of the vehicle information device terminal 412 installed in front of the driver's seat. Therefore, even if the child opens the rear side door of the vehicle and goes out of the vehicle by himself/herself, it is possible to quickly recognize the situation, and it is possible to prevent the child from falling into a dangerous situation in advance. That is, the vehicle seat 41 of the present embodiment has a "watching function" for watching a child in the vehicle rear space 47. In this case, when a change in the situation occurs, for example, when the presence of the user 48 in the vehicle rear space 47 is not detected, it is also possible to notify the guardian by an alarm or the like from the vehicle information device terminal 412.

Furthermore, the vehicle seat 41 of the present embodiment can transmit the detection information 49 to the portable information terminal 413 such as a smart phone owned by the guardian by the detection information transmitting unit 410. Therefore, for example, during a break in a service area or the like, even when the guardian needs to temporarily leave the vehicle to go to the toilet or the like, and the child is left in the vehicle, the child in the vehicle rear space 47 can be confirmed from the outside of the vehicle. As a result, the guardian can safely finish the work such as toilet or the like.

Further, even when the child goes out of the vehicle by himself/herself, it is possible to quickly recognize the situation, and it is possible to quickly return to the parking position of the vehicle. In this way, it is possible to prevent the child from falling into a dangerous situation in advance. Furthermore, the possibility of a child becoming lost can be reduced, and the possibility of a child being involved in a crime such as taking away a child can also be reduced. Similarly, in such a case, when a change in the situation occurs, such as when the presence of the user 48 in the vehicle rear space 47 is not detected, it is also possible to notify the guardian by an alarm or the like from the portable information terminal 413.

The sensor 46 functioning as a human detection sensor is not intended for a child as the user 48 as in the above example. For example, it may be used to prevent elderly people with dementia who were resting in the vehicle rear space 47 from wandering out of the vehicle. Furthermore, it is possible to check whether an infant or a child is left in the vehicle rear space 47 on a hot day in midsummer, and thus it is possible to prevent an accident or the like from occurring in advance.

Further, as described above, in addition to a human, a pet such as a dog or a cat, or other small animals can be detected as a "user". Thus, even if the dog or the like escapes from the vehicle through gaps in the windows or doors while the dog or the like is released into the vehicle rear space 47 to play after the seat arrangement is transformed into the completely flat state, such a situation can be immediately grasped. This increases the likelihood that small animals, such as dogs, that have gone out of the vehicle can be quickly discovered.

The fourth embodiment of the present disclosure is described above.

In the above explanation of embodiment, the vehicle seat 41 for the rear seat of the vehicle has been described, but the "rear seat" here simply means a seat on the rear side located behind the driver's seat. Therefore, in the case of a vehicle in which a plurality of seats are arranged in the traveling direction of the vehicle (for example, in the case of an elongated vehicle such as a bus), the present invention can of course be applied to a seat other than the rearmost seat.

### [Fifth Embodiment]

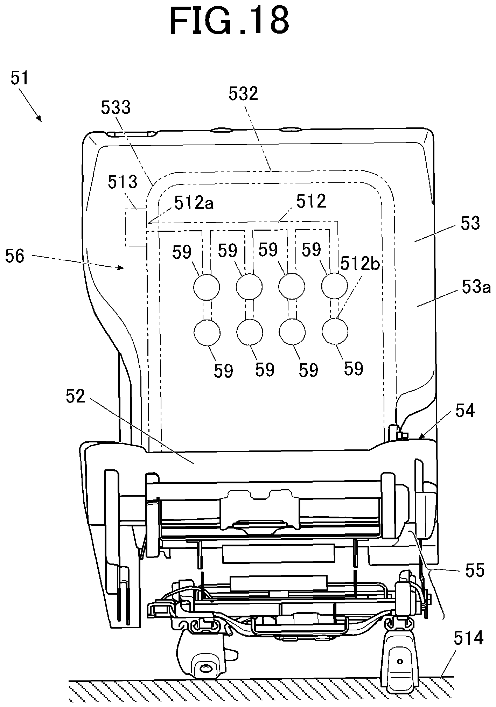

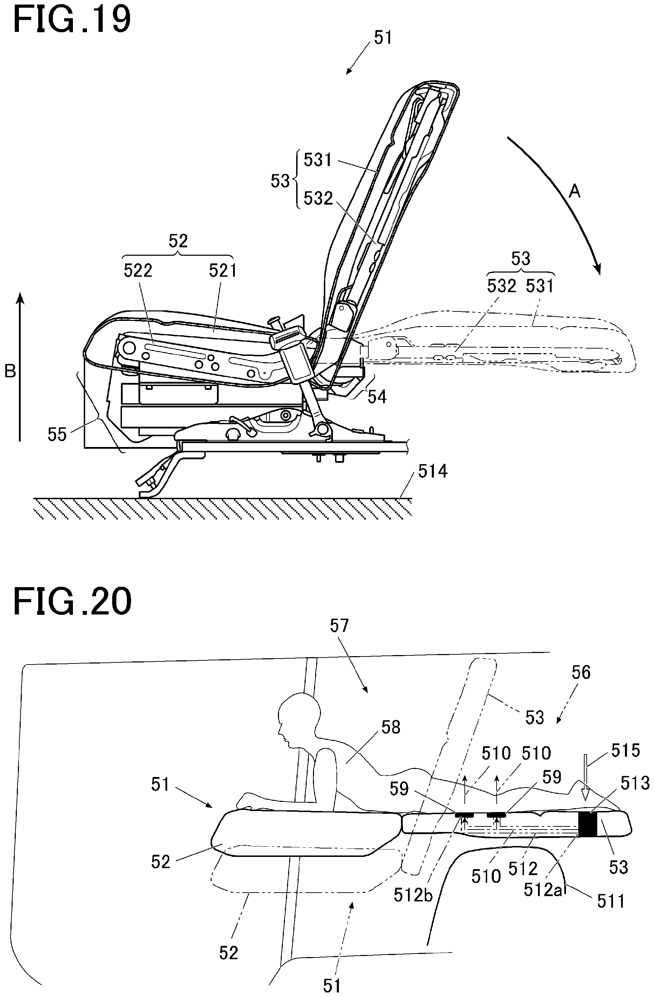

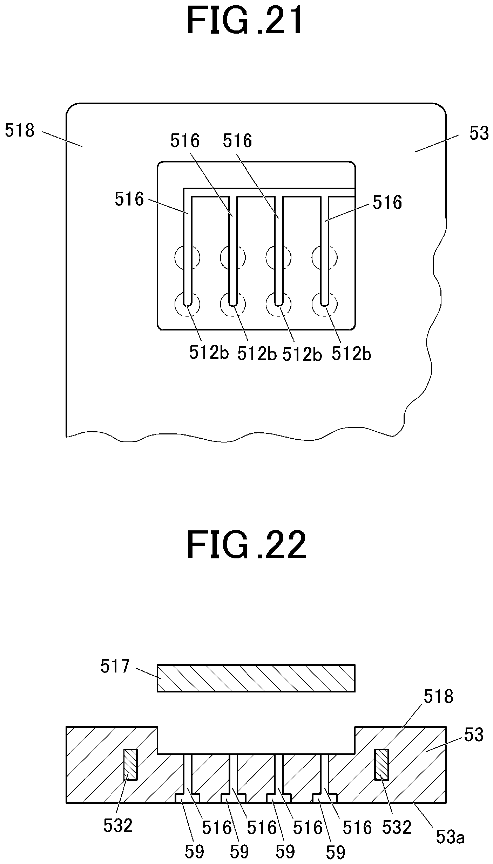

FIG. 18 is a view schematically showing the configuration of the vehicle seat 51 of an embodiment of the present invention from the front, FIG. 19 is a view schematically showing the configuration of the vehicle seat 51 of FIG. 18 from the side, FIG. 20 is a view schematically showing the effect of the present embodiment, FIG. 21 is a view schematically showing the air passage groove portion, and FIG. 22 is a view schematically showing the cross section of the seat back. In FIGS. 18 to 22, for the sake of simplification of the description, some of the components are not shown.

The vehicle seat 51 is a vehicle seat for a rear seat of a vehicle, and mainly includes a seat cushion 52, a seat back 53, a reclining mechanism part 54, an elevating mechanism part 55, and an air-conditioning mechanism unit 56.

The seat cushion 52 is a part of the vehicle seat 51 that is located in front of the rear wheel house 511 of the vehicle and supports buttocks and thighs of the occupant. The seat cushion 52 includes a cushion body 521 formed of a cushioning member that absorbs an impact when the occupant is seated, and a cushion frame 522 formed of a rigid member that supports the cushion body 521 from the inside thereof. On the other hand, like the seat cushion 52, the seat back 53 includes a seat back body 531 formed of a cushioning member that absorbs impact, and a seat back frame 532 formed of a rigid member that supports the seat back body 531 from the inside thereof.

The seat back 53 is a part of the vehicle seat 51 that supports the back of the occupant. The seat back 53 is connected to a rear end portion of the seat cushion 52 via a reclining mechanism part 54, which will be described later.

The reclining mechanism part 54 is a part of the vehicle seat 51 that inclines the seat back 53 with respect to the seat cushion 52. The reclining mechanism part 54 also serves to connect the seat back 53 to the rear end portion of the seat cushion 52.

The elevating mechanism part 55 is a part of the vehicle seat 51 capable of lifting and lowering the seat cushion 52 with respect to the vehicle floor surface 514 in the vertical direction (the vertical direction in FIGS. 18 and 19). The elevating mechanism part 55 lifts the seat cushion 52 in the vertical direction when seat arrangement is being, by the reclining mechanism part 54, transformed into the backward falling state in which the seat back 53 falls backward, in conjunction with inclination of the seat back 53 to the backward falling state so that the seat back 53 is positioned above the rear wheel house 511 to avoid interference with the rear wheel house 511. More specifically, in FIG. 19, the elevating mechanism part 55 lifts the seat cushion 52 in the direction B in the drawing together with the seat back 53 connected to the rear end portion of the seat cushion 52 in conjunction with the seat back 53 rotating in the direction A in the drawing and approaching the backward falling state.

In the present specification, the "backward falling state" means that the seat back 53 is in a state nearly horizontal with respect to the vertical direction. Further, in the present specification, "in conjunction with inclination to the backward falling state" means interlocking with the inclination of the seat back 53 after the seat back 53 is inclined and approaches the backward falling state to a predetermined level, in other words, after the seat back 53 is rotated to a predetermined angle with respect to the seat cushion 52. That is, the seat cushion 52 does not start to rise only by the upward seat back 53, which is indicated by the solid line in FIG. 19, being slightly inclined backward. In fact, the elevating mechanism part 55 can lift the seat cushion 52 in the B-direction while maintaining the upward orientation of the seat back 53 of the solid line in FIG. 19 (i.e., without inclination of the seat back 53).

Here, the elevating mechanism part 55 is connected to the cushion frame 522 in the seat cushion 52, and the cushion frame 522 is pushed up in the direction B in the drawing by using a gear mechanism (not shown) that transmits a rotational driving force such as a motor, thereby achieving an upward movement of the seat cushion 52. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 53 rotates at the above-described predetermined angle or more, the switch of the rotational drive source such as the above-described motor is turned on and the rotational driving force is transmitted to the gear mechanism is considered.

In the present embodiment, the elevating mechanism part 55 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 20, the vehicle seat 51 in the seat arrangement before the seat back 53 falls backward, in other words, the seat arrangement in which the seat back 53 is in the "standing state" with respect to the vehicle floor surface 514 (or the "normal seat arrangement") is indicated by a dotted line. In addition, the vehicle seat 1 in the seat arrangement of the backward falling state is indicated by a solid line on the upper side in the vertical direction than the position of the vehicle seat 51 indicated by the dotted line and on the upper side of the rear wheel house 511. When the seat cushion 52 is lifted in conjunction with the seat back 53 approaching the backward falling state, the seat back 53 can be linearly connected to the seat cushion 52 in the horizontal direction without a level difference while avoiding interference of the rear wheel house 511 as shown in FIG. 20. In this case, unlike Patent Document 1, the entire seat back 53 is completely flat. Consequently, as shown in FIG. 20, the vehicle rear space 57 in the vehicle can be utilized to the maximum extent so that the occupant can lie on his/her stomach in the vehicle, and a highly usable vehicle seat is realized.

Here, it is preferable that a plurality of the vehicle seats 51 are arranged in parallel independently of each other along the vehicle-width direction, and each of a plurality of the elevating mechanism part 55 independently lifts and lowers the seat cushion 52 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

The vehicle seat 51 of the present embodiment includes an air-conditioning mechanism unit 56 having a plurality of vent holes 59 that are provided to be open to the seat surface 53a of the seat back 53, an air passage 512 that is provided inside the seat back 53, communicates with the vent holes 59, and through which the conditioned air 510 can flow, and an air-conditioning fan 513 that communicates with the air passage 512, generates the conditioned air 510 in the air passage 512. One end 512a of the air passage 512 is connected to the air-conditioning fan 513, and the other end 512b of the air passage 512 is connected to the plurality of vent holes 59. Incidentally, in FIG. 18 and the like, the vent hole 59 has been shown as a large circular size for simplification of illustration, but the present invention is not limited thereto, and it is sufficient that the conditioned air 510 to be described later has a size capable of ventilation.

As described above, the vehicle seat 51 of the present embodiment includes the air-conditioning mechanism unit 56 inside the seat back 53, so that the vehicle rear space 57 after the seat back 53 is transformed into a seat arrangement that is in the backward falling state can be ventilated (aerated) by the conditioned air 510.

Here, the air-conditioning fan 513 of the air-conditioning mechanism unit 56 is provided inside the seat back 53, and in particular, is provided in the vicinity of the corner 533 of the seat back frame 532 serving as the skeleton of the seat back 53. The seat back frame 532 supports a load applied by the occupant seated in the rear seat. Further, in the completely flat state described above, it is made of a metal material (rigid material) having high rigidity in order to support a load applied from above by the user 58 or the like resting on the seat back 53.

Further, as shown in FIG. 18, the corner 533 corresponds to a bent portion of the seat back frame 532 having a substantially U-shape, and corresponds to a position above the right shoulder of the occupant when seated. In addition, a locking mechanism (not shown) of the reclining mechanism part 54 for inclining the seat back 53 is generally provided at such a position.

Therefore, in the seat back frame 532, the corner 533 and the vicinity thereof are particularly rigid portions, and are positioned above the right shoulder of the occupant when seated, and thus are portions where the possibility of contacting occupant in the seated position is low. Therefore, the air-conditioning fan 513 can be stably installed. Further, even when the air-conditioning fan 513 is operated, there is no possibility of vibration or the like occurring with the rotation of the fan, and the generation of vibration noise (undesired sound) accompanying this can be suppressed.

Further, even after the seat cushion 52 and the seat back 53 are completely transformed into the flat seat arrangement without impairing the seating property of the occupant, there is little possibility that the head, arms, elbows, feet, or the like of the user 58 contacts the location of the air-conditioning fan 513 even if the user 58 falls asleep.

In FIG. 18 and the like, the vehicle seat 51 disposed on the right side of the rear seat is exemplified, but the present invention is not limited thereto, and the vehicle seat disposed on the left side of the rear seat can be similarly applied. In this case, an air-conditioning fan (not shown) of the air-conditioning mechanism unit may be provided at a position corresponding to the left shoulder position of the occupant when seated. As a result, the same effects as described above can be obtained.

Further, in the vehicle seat 51 of the present embodiment, the air-conditioning fan 513 of the air-conditioning mechanism unit 56 may use either a so-called intake fan or an exhaust fan. As shown in FIG. 20, by employing an exhaust fan as the air-conditioning fan 513, the conditioned air 510 flowing from the air-conditioning fan 513 toward the vent holes 59 can be generated in the air passage 512 in accordance with the operation of the air-conditioning fan 513. That is, air in the vehicle rear space 57 (vehicle interior air 515) is sucked in from an intake port (not shown) provided in the air-conditioning fan 513, and the conditioned air 510 flowing between one end 512a of the air passage and the other end 512b of the air passage is generated, and the conditioned air 510 can be exhausted from the vent holes 59. Thus, the vehicle rear space 57 can be aerated or ventilated by the conditioned air 510 blown to the vehicle rear space 57. Furthermore, air (conditioned air 510) can be circulated at the vehicle rear space 57.

On the other hand, by employing an intake fan as the air-conditioning fan 513, the air of the vehicle rear space 57 (vehicle interior air 515) is sucked from the vent hole 59 provided on the seat surface 53a of the seat back 53 in accordance with the operation of the air-conditioning fan 513, the conditioned air 510 flowing between the one end 512a of the air passage (the air-conditioning fan 513) from the other end 512b of the air passage is generated in the air passage 512, and the conditioned air 510 can be exhausted from the exhaust port (not shown) of the air-conditioning fan 513. As a result, the vehicle rear space 57 can be ventilated or aerated by the conditioned air 510 blown to the vehicle rear space 57 in the same manner as described above. Furthermore, air (conditioned air 510) can be circulated at the vehicle rear space 57.

The flow direction of the conditioned air 510 may be arbitrarily determined by switching the operation direction (exhaust direction, intake direction) of the air-conditioning fan 513. In addition, adjustment of the air volume or the like of the conditioned air 510 to be generated or adjustment of the temperature or the like of the conditioned air 510 can also be performed arbitrarily. Since the functions related to the air-conditioning are well known, the description thereof will be omitted here.

Further, as shown in FIG. 18, the vent hole 59 in the air-conditioning mechanism unit 56 is provided so as to have a plurality of openings on the seat surface 53a of the seat back 53. Here, as described above, the seat back 53 is configured to include the seat back frame 532 formed inside and the seat back body 531 covering the seat back frame 532. Further, a sheet cover covering all or a part of the seat back body 531 may be provided. Further, the vent hole 59 is not completely open, and may be covered with opening by, for example, a mesh-like material, so that the conditioned air 510 can be circulated.

As shown in FIG. 18, the air passage 512 of the vehicle seat 51 communicates with the air-conditioning fan 513 provided in the vicinity of the corner 533, in other words, at an obliquely upper position of the seat back 53, and is formed downward along the longitudinal direction of the seat back 53. The back face 518 of the seat back 53 is provided with a portion recessed in a substantially rectangular shape from the back face 518, and a plurality of groove-shaped air passage groove portions 516 are formed along the longitudinal direction of the seat back 53 (corresponding to the vertical direction of the paper surface in FIG. 21). Further, the air passage groove portion 516 adjacent to each other are connected to each other at their upper ends.

Further, each air passage groove portion 516 extends to the other end 512b of the air passage and is connected to the vent hole 59. In addition, the air passage groove portion 516 branches in the middle thereof, extends to the other end 512b of the air passage, and is connected to the vent hole 59 (see FIG. 21). Further, the back face 518 of the seat back 53 has a groove portion covering part 517 for covering a portion recessed in a substantially rectangular shape. As a result, as shown in FIG. 22, the groove portion covering part 517 can be fitted into the recessed portion of the back face 518.

As a result, an air passage 512 surrounded by the air passage groove portion 516 and the groove portion covering part 517 is formed inside the seat back 53 (the seat back body 531), and the conditioned air 510 generated by the air-conditioning fan 513 can flow through the air passage 512.

Here, the groove portion covering part 517 may be made of, for example, a felt-like cloth member and may be fitted so as to cover a recessed portion provided on the back face 518 of the seat back 53. As a result, the air passage 512 can be easily formed inside the seat back 53.

By providing the air-conditioning mechanism unit 56 having the above-described configuration, the user 58 using the vehicle rear space 57 after the seat arrangement is transformed into a completely flat state can ventilate the vehicle rear space 57 by the conditioned air 510 of the intake air or the exhaust air generated by the air-conditioning fan 513 and can circulate the conditioned air 510. By means of these ventilation, aeration or circulation functions, the air in the space of the vehicle rear space 57 can be easily replaced. Therefore, the comfort of use of the user 58 can be improved.

It should be noted that by removing the groove portion covering part 517 from the back face 518 of the seat back 53, the air passage groove portion 516 can be easily accessed. Therefore, even when a defect occurs in the air-conditioning mechanism unit 56 including the air-conditioning fan 513, or even when the foreign particles, dust, or the like accumulates in the air passage 512 due to some factor and the stable circulation of the conditioned air 510 becomes impossible, the groove portion covering part 517 can be temporarily removed, and the causes of these defects can be quickly removed. Then, the air-conditioning mechanism unit 56 can be utilized again by fitting the groove portion covering part 517 into the back face 518. Thus, the maintenance work can be easily performed, and the comfort of use of the user 58 is not impaired.

The fifth embodiment of the present disclosure is described above.

In the above explanation of embodiment, the vehicle seat 51 for the rear seat of the vehicle has been described, but the "rear seat" here simply means a seat on the rear side located behind the driver's seat. Therefore, in the case of a vehicle in which a plurality of seats are arranged in the traveling direction of the vehicle (for example, in the case of an elongated vehicle such as a bus), the present invention can of course be applied to a seat other than the rearmost seat.

### [Sixth Embodiment]

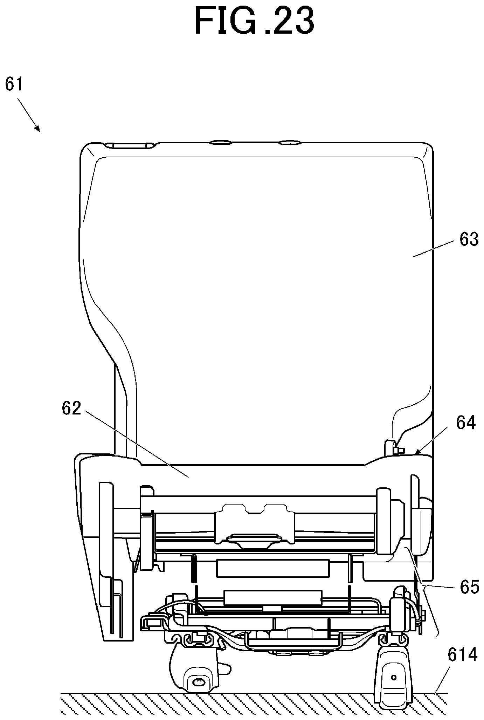

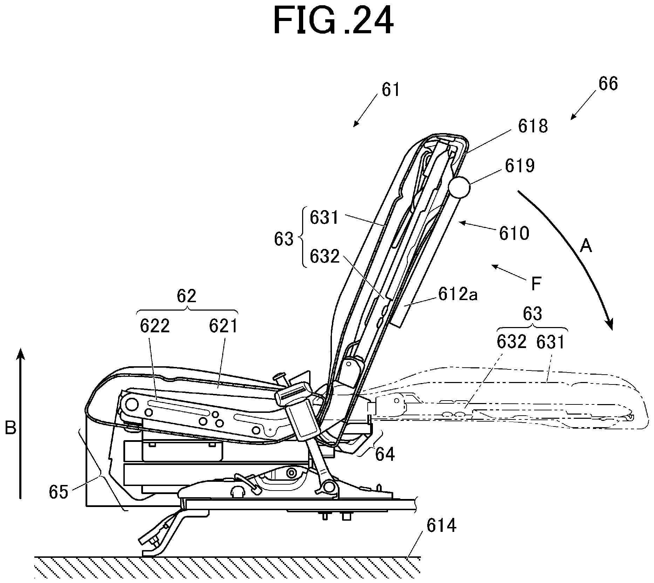

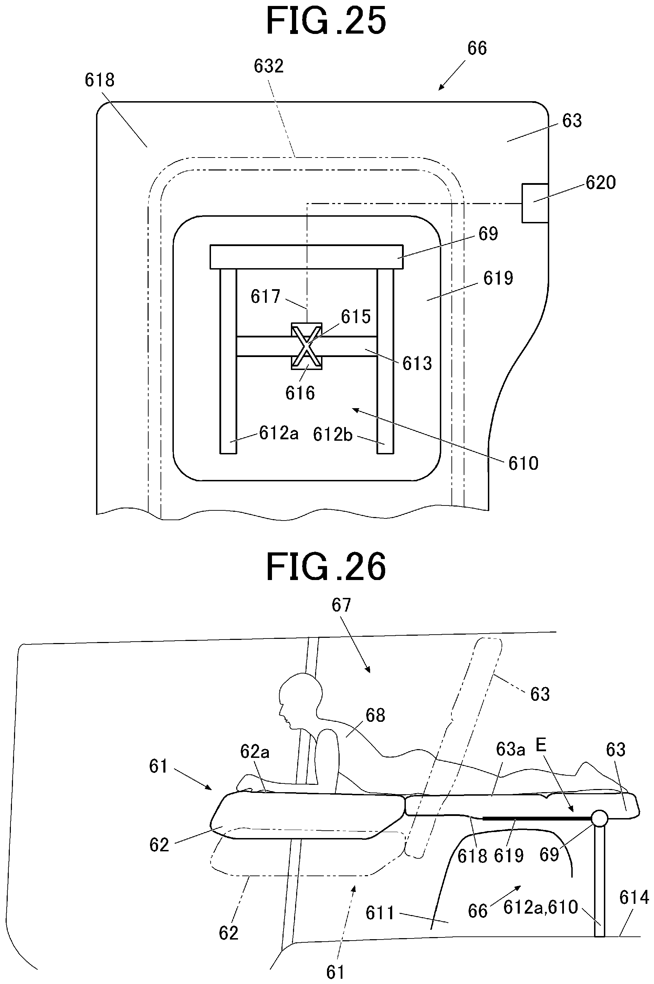

FIG. 23 is a diagram schematically showing the configuration of the vehicle seat 61 of an embodiment of the present invention from the front, FIG. 24 is a diagram schematically showing the configuration of the vehicle seat 61 of FIG. 23 from the side, FIG. 25 is a diagram schematically showing the configuration of the back face of the seat back, and FIG. 26 is a diagram schematically showing the advantages of the present embodiment.

The vehicle seat 61 is a vehicle seat for a rear seat of a vehicle, and mainly includes a seat cushion 62, a seat back 63, a reclining mechanism part 64, an elevating mechanism part 65, and a seat back support part 66.

The seat cushion 62 is a part of the vehicle seat 61 that is located in front of the rear wheel house 611 of the vehicle and supports buttocks and thighs of the occupant. The seat cushion 62 includes a cushion body 621 formed of a cushioning member that absorbs an impact when the occupant is seated, and a cushion frame 622 formed of a rigid member that supports the cushion body 621 from the inside thereof. On the other hand, like the seat cushion 62, the seat back 63 includes a seat back body 631 formed of a cushioning member that absorbs impact, and a seat back frame 632 formed of a rigid member that supports the seat back body 631 from the inside thereof.

The seat back 63 is the part of vehicle seat 61 that supports the back of occupant. The seat back 63 is connected to a rear end portion of the seat cushion 62 via a reclining mechanism part 64, which will be described later.

The reclining mechanism part 64 is a part of the vehicle seat 61 that inclines the seat back 63 with respect to the seat cushion 62. The reclining mechanism part 64 also serves to connect the seat back 63 to the rear end portion of the seat cushion 62.

The elevating mechanism part 65 is a part of the vehicle seat 61 capable of lifting and lowering the seat cushion 62 with respect to the vehicle floor surface 614 in the vertical direction (the vertical direction in FIGS. 23 and 24). The elevating mechanism part 65 lifts the seat cushion 62 in the vertical direction when seat arrangement is being, by the reclining mechanism part 64, transformed into the backward falling state in which the seat back 63 falls backward, in conjunction with inclination of the seat back 63 to the backward falling state so that the seat back 63 is positioned above the rear wheel house 611 to avoid interference with the rear wheel house 611. More specifically, in FIG. 24, the elevating mechanism part 65 lifts the seat cushion 62 in the direction B in the drawing together with the seat back 63 connected to the rear end portion of the seat cushion 62 in conjunction with the seat back 63 rotating in the direction A in the drawing and approaching the backward falling state.

In the present specification, the "backward falling state" means that the seat back 63 is in a state nearly horizontal with respect to the vertical direction. Further, in the present specification, "in conjunction with inclination to the backward falling state" means interlocking with the inclination of the seat back 63 after the seat back 63 is inclined and approaches the backward falling state to a predetermined level, in other words, after the seat back 63 is rotated to a predetermined angle with respect to the seat cushion 62. That is, the seat cushion 62 does not start to rise only by the upward seat back 63, which is indicated by the solid line in FIG. 24, being slightly inclined backward. In fact, the elevating mechanism part 65 can lift the seat cushion 62 in the B-direction while maintaining the upward orientation of the seat back 63 of the solid line in FIG. 24 (i.e., without inclination of the seat back 3).

Here, the elevating mechanism part 65 is connected to the cushion frame 622 in the seat cushion 62, and the cushion frame 622 is pushed up in the direction B in the drawing by using a gear mechanism (not shown) that transmits a rotational driving force such as a motor, thereby achieving an upward movement of the seat cushion 62. As such a gear mechanism, a mechanism of a conventional sheet height adjusting device as described in JP-A-2006-182039 and JP-A-2001-138780 can be used. At this time, as the above-described interlocking mechanism, for example, a mechanism in which when the seat back 3 rotates at the above-described predetermined angle or more, the switch of the rotational drive source such as the above-described motor is turned on and the rotational driving force is transmitted to the gear mechanism is considered.

In the present embodiment, the elevating mechanism part 65 utilizes an elevating mechanism using such a gear mechanism, but in the present disclosure, an elevating mechanism part utilizing another elevating mechanism may be employed. For example, an elevating mechanism part using an elevating mechanism using hydraulic pressure, pneumatic pressure, or the like may be employed.

In FIG. 25, the vehicle seat 61 in the seat arrangement before the seat back 63 falls backward, in other words, the seat arrangement in which the seat back 63 is in the "standing state" with respect to the vehicle floor surface 614 (or the "normal seat arrangement") is indicated by a dotted line. In addition, the vehicle seat 61 in the seat arrangement of the backward falling state is indicated by a solid line on the upper side in the vertical direction than the position of the vehicle seat 61 indicated by the dotted line and on the upper side of the rear wheel house 611. When the seat cushion 62 is lifted in conjunction with the seat back 63 approaching the backward falling state, the seat back 63 can be linearly connected to the seat cushion 62 in the horizontal direction without a level difference while avoiding interference of the rear wheel house 611 as shown in FIG. 26. In this case, unlike Patent Document 1, the entire seat back 63 is completely flat. Consequently, as shown in FIG. 25, the vehicle rear space 67 in the vehicle can be utilized to the maximum extent so that the occupant can lie on his/her stomach in the vehicle, and a highly usable vehicle seat is realized.

Here, it is preferable that a plurality of the vehicle seats 61 are arranged in parallel independently of each other along the vehicle-width direction, and each of a plurality of the elevating mechanism part 65 independently lifts and lowers the seat cushion 62 to be elevated.

In this preferred form, in a normal seat arrangement, the heights of the adjacent rear seats are relatively changed so that the heights of eyes of persons with body differences (for example, parents and children) are aligned with each other. Further, when the infant seat (junior seat) is placed on the rear seat, the height of the infant seat can be directly adjusted to a desired position without separately preparing a cushion or the like and raising the height of the infant seat.

As shown in FIG. 25, the seat back support part 66 of the vehicle seat 61 of the present embodiment has a rotation shaft 69 attached to the seat back pan frame 619 of the back face 618 of the seat back 63, and a pair of support leg part 610 rotatably attached to the rotation shaft 69, and is formed so as to be transformable in a folded state F (see FIG. 24) in which the support leg part 610 is folded along the seat back pan frame 619, and in an unfolded state E (see FIG. 26) in which the support leg part 610 is unfolded from the seat back pan frame 619. As a result, the pair of the support leg parts 610 in the folded state F during normal traveling can be transformed into the unfolded state E that is unfolded substantially vertically from the back face 618 when the seat back 63 is brought into the backward falling state.

More specifically, the seat back support part 66 includes a rotation shaft 69 that is attached to a seat back pan frame 619 that is a plate shape frame material provided on the back face 618 of the seat back 63, and a support leg part 610 that is rotatably attached to the rotation shaft 69 and has a pair of main support legs 612a and 612b whose one end is in contact with the vehicle floor surface 614 and an auxiliary support leg 613 that connects the vicinity of substantially the center of the pair of main support legs 612a and 612b, and has a substantially H-shape.

The seat back support part 66 having such a configuration is connected to one end of each of the rotation shaft 69 and the pair of main support legs 612a and 612b, and can be rotated with the connection point as a rotation axis. As a result, the support leg part 610 can be transformed between a folded state F in which the main support legs 612a and 612b are folded so that the longitudinal direction thereof is aligned along the back face 618 of the seat back 63a and an unfolded state E in which the main support legs 612a and 612b are flipped up from the back face 618. A rotation restricting portion (not shown) is provided to restrict further rotation of the main support legs 612a and 612b from the unfolded state E. This allows the support leg part 610 to transform between 0° and about 90° relative to the back face 618. Further, the configuration of the rotation restricting portion is not particularly limited, and may include a configuration such as a stopper member that abuts against the main support legs 612a and 612b in order to restrict the rotation of 90° or more.

In the unfolded state E, the other end of the pair of main support legs 612a and 612b, in other words, the opposite end connected to the rotation shaft 69 contacts the vehicle floor surface 614 (see FIG. 26).

As a consequence, the seat back 63 after the seat arrangement is transformed into the completely flat state can be supported by the support leg part 610 from the lower side (the back face 618 side), and the load-bearing performance of the seat back 63 in the flat state can be improved. When there is no configuration of the seat back support part 66 in the present embodiment, the seat back 63 needs to be cantilever-supported by the seat cushion 62 fixed to the vehicle floor surface 614, and in particular, when a strong load such as a heavy load is applied to the leading end of the seat back 63, there is a possibility that the load cannot be supported. This may partially limit its use in the vehicle rear space 67.

Further, the seat back support part 66 of the present embodiment includes a support leg part fixing portion 615 that secures the support leg part 610 to the folded state F. Specifically, in the vehicle seat 61 of the present embodiment, a member that is attached to the back face 618 of the seat back 63 and that biases and locks an auxiliary support leg 613 toward the back face 618 side is used. This restricts deployment from the folded state F of the support leg part 610. Consequently, when the seat back 63 is in a standing state (normal seat arrangement), the support leg part 610 is restricted from freely rotating, for example, during traveling of the vehicle. As a result, it is possible to suppress the generation of vibration and noise caused by the rotation, and it is not possible to impair the comfort of use.

The seat back support part 66 further includes a support leg part unlocking mechanism part 616 that allows support leg part 610 to be transformed from the folded state F to the unfolded state E and from the unfolded state E to the folded state F in conjunction with the inclining of the seat back 63. As a result, the fixing of the support leg part 610 by the support leg part fixing portion 615 can be released in accordance with the release of the reclining locking mechanism part 620 for reclining the seat back 63 by the reclining mechanism part 64.

A connecting cable 617 is interposed between the reclining locking mechanism part 620 and the support leg part fixing portion 615 to transmit the unlocking by the reclining locking mechanism part 620 to the support leg part fixing portion 615.

Accordingly, when the seat back 63 is in the standing state, the support leg part 610 maintains the folded state F, and further, the support leg part 610 can be transformed into the unfolded state E in conjunction with the operation of unlocking the seat back 63 and inclining to the backward falling state by the reclining mechanism part 64.

The sixth embodiment of the present disclosure is described above.

In the above explanation of embodiment, the vehicle seat 61 for the rear seat of the vehicle has been described, but the "rear seat" here simply means a seat on the rear side located behind the driver's seat. Therefore, in the case of a vehicle in which a plurality of seats are arranged in the traveling direction of the vehicle (for example, in the case of an elongated vehicle such as a bus), the present invention can of course be applied to a seat other than the rearmost seat.

### Industrial Applicability

The present disclosure is useful for realizing a highly usable vehicle seat.

### Reference Signs List

11 vehicle seat
12 seat cushion
13 seat back
14 reclining mechanism part
15 elevating mechanism part
16 armrest
16a armrest storage groove portion
17 vehicle rear space
18 shade storage portion
19 attachment mounting part
110 power supply port
111 rear wheel house
114 vehicle floor surface
121 cushion body
122 cushion frame
131 seat back body
132 seat back frame
21 vehicle seat
22 seat cushion
23 seat back
23a overhang portion
24 reclining mechanism part
25 elevating mechanism part
26 cushion bank portion
27 vehicle rear space
29 bank portion rotation mechanism
29a locking pin
29b strip
211 rear wheel house
214 vehicle floor surface
221 cushion body
222 cushion frame
231 seat back body
232 seat back frame
31 vehicle seat
32 seat cushion
33 seat back
33a overhang portion
34 reclining mechanism part
35 elevating mechanism part
36 cushion bank portion
37 vehicle rear space
38 shade storage portion
39 bank portion rotation mechanism
39a locking pin
39b strip
311 rear wheel house
312 engaging part
313 engaging part
314 vehicle floor surface
315 skeleton
316 engaging part
321 cushion body
322 cushion frame
331 seat back body
332 seat back frame
41 vehicle seat
42 seat cushion
42a,43a seat surface
43 seat back
44 reclining mechanism part
45 elevating mechanism part
46 sensor
47 vehicle rear space
48 user
49 detection information
410 detection information transmitting unit
411 rear wheel house
412 information device terminal
412a,413a terminal screen
413 portable information terminal
414 vehicle floor surface
415 wireless communication line
421 cushion body
422 cushion frame
431 seat back body
432 seat back frame
51 vehicle seat
52 seat cushion
52a,53a seat surface
53 seat back
54 reclining mechanism part
55 elevating mechanism part
56 air-conditioning mechanism unit
57 vehicle rear space
58 user
59 vent hole
510 conditioned air
511 rear wheel house
512 air passage
512a one end of the air passage
512b other end of the air passage
513 air-conditioning fan
514 vehicle floor surface
515 vehicle interior air
516 air passage groove portion
517 groove portion covering part
518 back face
521 cushion body
522 cushion frame
531 seat back body
532 seat back frame
533 corner
61 vehicle seat
62 seat cushion
62a,63a seat surface
63 seat back
64 reclining mechanism part
65 elevating mechanism part
66 seat back support part
67 vehicle rear space
68 user
69 rotation shaft
610 support leg part
611 rear wheel house
612a,612b main support leg
613 auxiliary support leg
614 vehicle floor surface
615 support leg part fixing portion
616 transformation interlocking mechanism part
617 connecting cable
618 back face
619 seat back pan frame
620 locking mechanism part
621 cushion body
622 cushion frame
631 seat back body
632 seat back frame
E unfolded state
F folded state

## Claims

1. A vehicle seat for a rear seat of a vehicle, comprising:
a seat cushion positioned in front of a rear wheel house of the vehicle and supporting buttocks and thighs of an occupant;
a seat back supporting a back of the occupant;
a reclining mechanism part for inclining the seat back relative to the seat cushion; and
an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, wherein
the seat back includes an armrest on one side thereof on which an arm of the occupant rests when supporting the back of the occupant.

2. The vehicle seat according to claim 1, wherein a plurality of the vehicle seats are arranged in parallel independently of each other along a vehicle-width direction, and each of a plurality of the elevating mechanism part lifts and lowers the seat cushions to be elevated independently of each other.

3. The vehicle seat according to claim 1 or 2, wherein
the armrest is rotatable, using an end portion of the armrest as a rotation axis, between a raised state in which the armrest protrudes in a direction intersecting a surface of the seat back extending while facing the back of the occupant and an unraised state in which the armrest extends along the surface of the seat back, and
the seat back further includes an armrest storage groove portion having a groove-shape and capable of storing the armrest in the unraised state.

4. The vehicle seat according to claim 3, wherein the armrest has a shade storage portion capable of storing a shade that functions as a partition or a sunshade inside the vehicle.

5. The vehicle seat according to claim 3, wherein the armrest has an attachment mounting part on distal end portion for attaching a predetermined attachment.

6. The vehicle seat according to claim 3, wherein the armrest storage groove portion has a power supply port at a bottom portion thereof for supplying power to electronic devices.

7. A vehicle seat for a rear seat of a vehicle, comprising:
a seat cushion positioned in front of a rear wheel house of the vehicle and supporting buttocks and thighs of an occupant;
a seat back supporting a back of the occupant;
a reclining mechanism part for inclining the seat back relative to the seat cushion; and
an elevating mechanism part capable of lifting and lowering the seat cushion in a vertical direction with respect to a vehicle floor surface, that lifts the seat cushion in the vertical direction when seat arrangement is being, by the reclining mechanism part, transformed into a backward falling state in which the seat back falls backward, in conjunction with inclination of the seat back to the backward falling state so that the seat back is positioned above the rear wheel house to avoid interference with the rear wheel house, wherein
the seat cushion includes a cushion bank portion that occupies one side of the seat cushion and is rotatable, using a rear end portion of the cushion bank portion as a rotation axis, separately from the rest of the seat cushion except for the cushion bank portion.

8. The vehicle seat according to claim 7, wherein a plurality of the vehicle seats are arranged in parallel independently of each other along a vehicle-width direction, and each of a plurality of the elevating mechanism part lifts and lowers the seat cushions to be elevated independently of each other.

9. The vehicle seat according to claim 7 or 8, wherein the seat cushion further includes a rotation position fixing mechanism for fixing a rotation position when the cushion bank portion is rotated separately from the rest of the seat cushion.

10. The vehicle seat according to claim 9, wherein
the seat back includes an overhang portion on a side of the seat back located in a rotational direction of the cushion bank portion, that abuts the cushion bank portion which is rotated, and prevents further rotation of the cushion bank portion, and
the cushion bank portion is rotatable between a non-rotating state in which the cushion bank portion occupies the one side of the seat cushion in a manner aligned with the rest of the seat cushion and an abutting state in which the cushion bank portion abuts the overhang portion of the seat back.
